(19) Europäisches Patentamt / European Patent Office / Office européen des brevets

(11) **EP 2 429 138 A1**

(12) **EUROPEAN PATENT APPLICATION**

(43) Date of publication:
**14.03.2012 Bulletin 2012/11**

(51) Int Cl.:
*H04L 25/02* (2006.01)   *H04L 25/03* (2006.01)
*H04B 7/08* (2006.01)

(21) Application number: **10450142.4**

(22) Date of filing: **07.09.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Technische Universität Graz
8010 Graz (AT)**

(72) Inventor: **Shutin, Dmitriy
80637 München (DE)**

(74) Representative: **Forsthuber, Martin
Patentanwaltskanzlei Matschnig & Forsthuber OG
Siebensterngasse 54
1071 Wien (AT)**

(54) **Method for the determination of the number of superimposed signals using variational bayesian inference**

(57)   The invention relates to a method for the joint estimation of a multipath wireless channel and of the number of specular propagation paths present in the channel in a wireless transmission system with at least one transmitter and at least one receiver, with both the transmitter and the receiver being equipped with multiple sensing elements, the method comprising the steps of: a) Transmitting a training/probing sequence; b) Receiving and sampling the sequence; c) Defining L potential signal components, parameterized with a set of parameters including a sparsity parameter that parameterizes a prior probability density function (pdf) for the multipath component; d) Jointly estimating the pdfs of all multipath component parameters and sparsity parameters from c) by defining auxiliary (latent) variables for the subset of parameters of a single component assuming the parameters of the other components fixed, and updating the pdfs of the component parameters using the estimated admissible hidden data; e) Evaluating developed pruning conditions to decide whether a component is removed or kept; f) Repeating d) and e) for all L components, and repeating the iterations anew until a set convergence criterion is complied with; g) Feeding the channel components and their parameters to further processing.

Fig. 2

EP 2 429 138 A1

**Description**

Field of the invention and description of prior art

The invention relates to a method for the joint estimation of a multipath wireless channel and of the number of specular propagation paths present in the channel in a wireless transmission system with at least one transmitter and at least one receiver, with both the transmitter and the receiver being equipped with multiple sensing elements (antennae). The number of elements at an antenna arrays is not critical; the invention can be applied to SISO(Single-Input-Single-Output) /SIMO(Single-Input-Multiple-Output)/MISO(Multiple-Input-Single-Output) as well as MIMO(Multiple-Input-Multiple-Output)-channels.

Typically, the whole estimation procedure starts with sending a probing/sounding/pilot signal that is known to both the transmitter and the receiver of the signal. The receiver, knowing the transmitted sequence, attempts to estimate how the known transmitted sequence was modified during the transmission. The "way" the pilot signal is modified (i.e., delayed, phase shifted, scaled) determines the channel state information, or channel impulse response - the characteristic of the underlying propagation environment; this is the goal of the channel estimation procedure. The sounding sequence is typically embedded in data stream and is periodically re-transmitted to obtain an updated version of the channel impulse response. Assuming that the useful data bits (unknown to the receiver) have been affected by the same channel, the receiver can mitigate data transmission distortions by "cancelling" the influence of the channel. Better channel description allows to increase data rates, decrease multi-user interference, and lower the power consumption of the receiver.

The channel estimation is an essential part of the receiver architecture. While current systems typically exploit statistical channel models to circumvent a detailed estimation of the channel impulse response, future systems will largely exploit detailed channel state information in order to adapt the transmission characteristics to a particular propagation environment. In case of multipath wireless channels, the receiver has to determine how many propagation paths (multipath components) are present, and what are the physical parameters of these paths, e.g., directions of the departure and arrival, phase shift due to the movement of the mobile, multipath delay, etc. The estimation of the multipath parameters and the number of multipath components are typically two separate problems: model order selection (i.e., selection of the number of propagation paths) and estimation (i.e., inference of the parameters of the propagation paths). When the number of the multipath components is assumed to be known channel estimation can be solved using a number of existing techniques, e.g., Expectation-Maximization, SAGE algorithm, MUSIC, ESPRIT, etc.; unfortunately, the results of these estimation procedures strongly depend on the assumed number of components.

The problem of estimation of the number of components in a signal mixture, such as a multipath wireless channel, is ultimately related to the problem of model order selection: the wireless multipath channel is represented as a sum of individual propagation paths, and the order of the channel model is simply the number of these propagation paths. One can classify model order selection methods in two classes: parametric and non-parametric methods. While the latter does not rely on any particular model assumptions it typically uses a lot of data in order to identify an optimal model order. Cross-validation is a typical example of non-parametric approaches. Unfortunately, in mobile environments the data is typically non-stationary: this makes non-parametric methods less suited for real-time applications; also, in practical communication systems, retransmitting channel sounding/pilot data for the cross-validation to select a proper model would be a waste of resources. Parametric approaches, on the other hand, can be employed in real-time scenarios and this is an important aspect in mobile wireless communication fields.

Methods for parametric approaches to model order selection/estimation are based on balancing model performance (i.e., sum of residual squared errors - a function that decreases with increasing number of components) with the model complexity (a function that grows with increasing number of components). Numerous existing approaches differ essentially by the way the complexity of the model is represented. Minimum description length (MDL), Normalized Maximum Likelihood (NML), Bayesian Information Criterium (BIC), Akaike Information Criterium (AIC) are typical examples of such parametric approaches. Typically, multiple models have to be trained in parallel; note that since the complexity of the model and the model performance are interdependent, the parameters of the model have to be re-estimated for each chosen model complexity; training multiple models in parallel allows to speed-up the computations. The trained models are then compared using BIC/MDL/AIC etc. using a single data set, so no retransmission is necessary. A model with an order that balances model performance and complexity is then chosen as an optimal one.

Although the aforementioned parametric approaches to model order selection are practical and often deliver acceptable results, in case of complex nonlinear models (and wireless channel estimation exemplifies such cases) they often result in suboptimal solutions.

More specifically, investigations have shown that in case of wireless channels they tend to significantly overestimate or underestimate the model order depending on an instantaneous Signal-to-Noise ratio; as a consequence, noise is treated as physical propagation path in the former case (typically in a high SNR- situation), while useful propagation information is ignored in the latter case. As the result, the communication system cannot optimally exploit the existing propagation environment potential. The key to such behaviour lies in the formal structure of the model complexity.

With an exception of simple models linear in parameters, the complexity of the model cannot be evaluated in a closed form. As the result, large sample approximations or simplifying assumptions are invoked to make implementations realizable. This often leads to insufficient penalization of the model performance and biased order estimation. Numerous empirical correction factors (which are typically problem-specific) are then employed to correct for improper order estimation. Even in cases when the approximate model complexity is used, such as in MDL/BIC/AIC approaches, the estimation algorithms depend on the model complexity; thus, multiple models with different model orders have to be estimated in order to find the optimal one. This in turn limits the application of these methods in online (real-time) data processing scenarios.

It is a goal of this invention to provide a method to efficiently determine the model order such as to eliminate aforementioned drawbacks while at the same time providing an efficient method for the estimation of wireless multipath channels that is low in demand of system resources.

Summary of the invention

The invention reaches this goal through the following steps:

a) Transmitting a training/probing sequence that is known to the receiver from the transmitter to the receiver;

b) Receiving the transmitted sequence and sampling it;

c) Defining L potential signal components, each component being assumed to be parameterized with a set of parameters including a sparsity parameter that parameterizes a prior probability density function (pdf) for the multipath component;

d) Jointly estimating the pdfs of the parameters of all multipath components from c) by defining auxiliary (latent) variables (called admissible hidden data within the proposed estimation algorithm) for the subset of parameters of a single component assuming that the parameters of the other components are fixed, and updating the pdfs of the component parameters (including the corresponding sparsity parameter) using the estimated admissible hidden data;

e) Evaluating developed pruning conditions to decide whether the updated component of step d) is removed or kept;

f) Repeating steps d) and e) for all L components, one component after another, one iteration per component, after all components have been updated, and repeating the iterations anew until a set convergence criterion is complied with;

g) Feeding the channel components and their parameters to further processing.

Preferably, in step c) the number of components L is set large enough such as to exceed the possible true number of multipath components present. The extra components will be then removed at the latter stages of the algorithm.

The parameters mentioned in step c) comprise multipath component gain, multipath delay, directional (both arrival and departure) information, Doppler shift, etc.; the additional sparsity parameter is also called evidence parameter. It controls the value of the gain as is explained below.

The steps d) to f) embody the so called Variational Bayesian SAGE (VB-SAGE) algorithm as it will be referred to in the following. The structure of the VB-SAGE-algorithm allows reducing the optimization to a sequence of L smaller optimizations with respect to the subset of parameters of one multipath component at a time, while keeping the parameters of the other multipath components fixed. The components are updated sequentially but may be updated in any order.

Steps d) and e) realize joint estimation and model order selection. Step f) (and the structure of the VB-SAGE algorithm in general) guarantees that the update of the parameters of a single component with the pruning monotonically decreases the variational free energy (which is the optimality criterion within the variational Bayesian framework). Thus, such joint estimation and model order selection is optimal with respect to the variational free energy.

By modelling a multipath wireless channel as a superposition of individual propagation paths (also called multipath components), the method allows to effectively (i.e., with small computational complexity) determine the number of the significant/reliable propagation components using a variational Bayesian inference framework. The estimation of the number of multipath components is done by introducing and estimating sparsity parameters - variables that measure the importance of each component in the model. The invention explains how this important information can be utilized within the context of channel estimation.

The proposed method extends the idea of superimposed signal estimation by allowing simultaneous parameter estimation and determination of the number of interfering signals. The method is inspired by the Evidence Procedure - an Empirical Bayes technique used for models linear in their parameters - to determine the optimal balance between the model order and the model complexity. It is essentially a formal representation of the Ockham's razor principle that puts preference on simple models over the complex ones. In this way the parametric model order selection works. The Evidence procedure constrains the model parameters with parametric sparsity priors; the values of the parameters of the prior - called sparsity parameters, or evidence parameters in this context - determine the optimal trade-off between the model performance and model complexity.

With an exception of models linear in their parameters, the estimation of the sparsity parameters is computationally very intensive; this requires determining the posterior pdf of the unknown model parameters and sparsity parameters. For nonlinear models, such as multipath wireless channels, this estimation can be numerically very demanding, and thus unsuitable for real-time scenarios. An alternative strategy is to approximate the complex posterior pdf with a simpler one. Variational Bayesian techniques achieve exactly this: they allow to realize the Evidence Procedure and channel estimation in a single framework. However, this does not alleviate the difficulty due to the nonlinearity of the channel model. To deal with the nonlinearity, the SAGE algorithm is extended into a variational framework. The resulting Variational Bayesian SAGE algorithm allows to reduce the joint nonlinear optimization (with the dimensionality of the objective function proportional to L) to a sequence of L nonlinear optimizations of a smaller dimension, with respect to the subset of parameters of one multipath component at a time, while keeping the parameters of the other multipath components fixed.

Thus, instead of a single L x M nonlinear optimization (with M being the number of parameters per a multipath component), an algorithm results that does a sequence of L individual M-dimensional optimizations. This is achieved by using latent variables - admissible hidden data - that guarantee that such component-wise optimization monotonically optimizes the objective function, which is the variational free energy. By cycling through the L components in a round-robin fashion the admissible hidden data is estimated and used to update the parameters of one component per update iteration, while fixing the parameters of the other components.

Such estimation strategy has a number of benefits that all stem from the resulting component-centred estimation approach. While the parameter estimation part is essentially identical to the estimation expressions obtained with the classical SAGE algorithm, the part related to the sparsity parameters is new and leads to a number of important practical implications, that constitute the core of this invention.

Due to the use of admissible hidden data within the algorithm, the variational estimation expressions for the parameters of the pdf of the sparsity parameters are significantly simplified. According to this invention this allows to study analytically the stationary points of the corresponding update expressions and (based on their analysis) develop pruning conditions that allow to decide whether the updated multipath component should be kept or removed from the model; as a consequence, the proposed model order selection is essentially a component-centered approach: the contribution of each component can be assessed independently from the other components, while still retaining the optimality of the estimation scheme. This makes the proposed method significantly different from the existing model order selection strategies. First, such optimality can be realized only for orthogonal signal components, which significantly restricts possible model choices. Second, due to the structure of the SAGE-based estimation scheme, the algorithm complexity scales linearly with the number L of potential multipath components; this significantly simplifies the hardware requirements for online implementations of the estimation scheme, not mentioning that this also reduces the dimensionality of the nonlinear optimization problem since it now involves only one component per update iteration. It is stressed that now the components can be estimated by a set of parallel processors (one processor per component), and each such processor may decide to remove the component from the model or continue updating it. Such approach requires learning a maximum of L components, while existing methods require comparing multiple models of different order, which requires estimating a total of L(L+1)/2 components (this is equivalent to having one processor per tested model of a certain order).

Furthermore, the obtained component pruning conditions are easy to interpret in terms of Signal-to-Noise ratio; thus, the pruning conditions can be adjusted to account for estimation artefacts, diffuse scattering, etc., using simple easy-to-interpret SNR-based empirical rules, and obtain pruning rules to detect multipath components with a desired strength (i.e., with a desired signal-to-noise ratio). This feature is of a great practical importance, since it allows to determine the "quality" (in terms of SNR) of each potential multipath component. This can be used in adaptive transmission schemes that can profit from knowing how reliable a particular propagation path is, or schemes that estimate only those propagation paths that ensure some predefined minimum required strength (again, in term of SNR). It can be noticed that the multipath SNR ultimately determines how much data can be transmitted along this path, since knowing the SNR of a propagation path is equivalent to knowing its transmission capacity.

Once the number of multipath components and their parameters have converged, the estimate of the channel impulse response can be used either for equalization purposes or smart beamforming, or any other task that can profit from an accurate knowledge of the channel impulse response.

Superimposed signal models appear in many areas of signal processing, Computational Intelligence, Control theory, and Information processing. Thus the proposed model order estimation can be easily transferred into these areas often without significant modification of the estimation schemes.

In a variant of the invention in step c) one of the following set of parametric sparsity priors is used:

- a Gaussian sparsity prior in the complex domain, selecting $p(\omega_1|\alpha_1) = CN(0,\alpha_1^{-1})$, where CN(m, s) is a complex Gaussian distribution with a mean m and variance s.
- a flat prior, selecting $p(\omega_1|\alpha_1) = CN(0,\alpha_1^{-1})$, in the limiting case as $\alpha_1 \to 0$;

- a Laplace prior in the complex domain, selecting $p(\omega_l \mid \alpha_l) = \dfrac{2\alpha_l^2}{\pi}\exp(-2\alpha_l \mid \omega_l)$ ,

with $\omega_1$ being a multipath gain factor and $\alpha_1$ being prior (sparsity) parameter of the 1-th component.

Furthermore it is advantageous to stop the update cycles (steps f)) when the number of signal components stabilizes or when the maximum change of the signal component parameters is below a certain threshold, e.g., when the change of the signal component parameters is below 1 percent. The threshold may e.g. be 0,5 percent or 0,001 percent, depending on the application. Any other suitable convergence criterion can also be used.

The pruning test on whether a signal component is removed or should be kept is implemented by determining the signal-to-noise ratio of a single component and comparing it to the threshold which depends on the estimated sparsity parameter. These conditions can also be empirically adjusted using simple SNR-based rules to compensate for model mismatches such as diffuse scattering, numerical inaccuracies, etc., or to retain the component above some desired SNR-level, as explained later in the detailed description.

Brief description of the drawings

In the following, the present invention is described in more detail with reference to the drawings, which show:

Fig. 1        A Bayesian network representing the composition of a received vector signal y with L components,

Fig. 2        an extended representation of the model of Fig. 1 with the admissible hidden data for a the 1-th component,

Fig. 3        a simplified block diagram of an update iteration for a single multipath component,

Fig. 4A-J     graphs of the performance of the method according to the invention for synthetic channels with equal component power; Fig. 4A-E show an estimation of model order $\hat{L}$ , Fig. 4F-J depict the achieved RMSE between the synthetic and reconstructed sensor responses,

Fig. 5        a graph with the averaged number of algorithm iterations versus per-component SNR,

Fig. 6A-J     graphs of the performance of the method according to the invention for synthetic channels with exponentially decaying component power; Fig. 6A-E show an estimation of the model order $\hat{L}$, Fig. 6F-J depict the achieved RMSE between the synthetic and reconstructed sensor responses,

Fig. 7        a graph with the empirical sensitivity level SNR'($\tau$) versus the relative delay, and

Fig. 8A-P     graphs with estimates of the power delay profile (Fig. 8A-D, Fig. 8I-L) and normalized estimates of the azimuth and elevation of departure for selected delay ranges (Fig. 8E-H, Fig. 8M-P).

Detailed description of the invention

In modelling real world data, proper model selection plays a pivotal role. In the following, the development of a new Variational Bayesian Space-Alternating Generalized Expectation-Maximization (VB-SAGE) algorithm is presented. The algorithm is applied for high-resolution parameter estimation and automatic model order selection within the Bayesian framework. VB-SAGE is an extension of the standard SAGE-algorithm already used for estimating multipath channel parameters for a fixed and known number of components L; it is based on two main concepts: sparsity and variational Bayesian inference. It starts with an overcomplete channel representation, and prunes irrelevant multipath components using Bayesian sparsity methods, thus implementing a model selection. Variational Bayesian inference is employed to estimate multipath parameters jointly with the parameters of sparsity priors.

Within the Bayesian sparsity framework several sparsity priors are considered: Gaussian, flat and Laplace priors. The hidden data introduced in the VB-SAGE algorithm allow obtaining a simple and easy to interpret component pruning rules/conditions for these priors. The obtained conditions are equivalent to removing signal components with the squared absolute gain below the scaled gain posterior variance, with a scaling constant depending on the component sparsity parameter. It will also be shown that these conditions are equivalent to removing components with an SNR determined by this constant. Using these criteria the pruning conditions can easily be adjusted using simple SNR-based formulas.

When applying high resolution algorithms to the estimation of wireless multipath channels an accurate determination of the number of dominant multipath components is required in order to reproduce the channel behaviour in a realistic manner. The latter is an essential driving mechanism for the design and development of new MIMO (Multiple Input - Multiple Output)-capable wireless communication systems. For simplicity a SIMO wireless channel is considered, e.g., an uplink channel with a base station equipped with multiple antennas. The received signal vector $\bar{z}$ *(t)* made of the signals at the outputs of these antennas can be represented as a superposition of an unknown number L of multipath components $\omega_l s(t,\theta_l)$ contaminated by additive noise *(t)*:

$$\vec{z}(t) = \sum_{l=1}^{L} \omega_l \vec{s}(t,\vec{\theta}_l) + \vec{\xi}(t). \tag{1}$$

In (1) $\omega_l$ is the multipath gain factor, and $\overline{s(t, \theta_l,)}$ are the received versions of the transmitted signal $\bar{s}(t)$, modified according to the dispersion parameters $\bar{\theta}_l$ of the 1-th propagation path. Estimating $\bar{\theta}_l$, and $\omega_l$ is typically the goal of estimation procedures while the estimation of the number L of these components is the object of model order selection.

Despite its obvious simplicity, (1) provides an over-simplified description of reality: it adequately accounts for specular-like propagation paths only. Diffuse scattering components, inevitably present in measured channel responses, have a significant impact on the performance of estimation algorithms utilizing (1). A very high number of specular components L is needed to represent these diffuse scattering components. Further effects leading to model mismatch are errors in calibration of the response of the transceiver or measurement equipment that cause inaccuracies in the description of $s(t, \theta_l)$, as well as the discrete-time approximations to (1), typically arising when model parameters are estimated using numerical optimization techniques.

All these effects have a significant impact on the performance of both parameter estimation algorithms and model order selection schemes utilizing (1). Experimental evidence shows that if the model order selection scheme is not carefully designed, the above model mismatch will lead to an overestimation of the number of relevant multipath components. Fictive components without any physical meaning will be introduced and their parameters estimated; models with higher number of components result in a better data fit, with additional components often having no physical meaning (this phenomenon can be explained as overfitting). Hence, radio channel estimators combining model order (component number) selection and component parameter estimation that are robust against model mismatch are needed here. Bayesian methods are promising candidates for such robust methods. Bayesian methods introduce appropriate mechanisms through the use of parametric priors for the model parameters. These priors act as penalty functions added to the parameter log-likelihood function, with the prior parameters regulating the impact of the penalty.

The classical Maximum Likelihood (ML) approach to the estimation of multipath parameters $\overline{\Omega} = \{\omega_1, \bar{\theta}_{1,...}, \omega_L, \bar{\theta}_L)$ in (1) involves maximization of the parameter likelihood $p(Z|\overline{\Omega})$ given the measurement Z. This requires numerical optimization of a high-dimensional objective function, with the dimension proportional to the assumed number of propagation paths L. In order to make the optimization tractable, the optimum can be efficiently approximated using Expectation-Maximization (EM)—types of algorithms. These algorithms ease the numerical optimization by means of considering a hypothetical complete (or hidden) data. This allows reducing the high-dimensional optimization to a set of L smaller optimizations with respect to the parameters of a single multipath component. Despite their efficiency, standard ML algorithms require fixing the number of components L, and typically do not employ any likelihood penalization to compensate for overfitting. As mentioned, Bayesian techniques can compensate for this through the use of a prior $p(\overline{\Omega}|\overline{\alpha})$, with $\overline{\alpha}$ being the prior parameters.

Through the likelihood penalization, the model fit (i.e., the value of the likelihood) can be traded for the model complexity (i.e., number of components in (1)). In this way the well-known Occham's razor principle for model order selection is realized - complex models with many parameters (signal components) are penalized more heavily, until a balance between complexity and model fit is reached. This principle lies in the heart of celebrated information-theoretic model order selection criteria, such as Minimum Description Length (MDL), Bayesian Information Criterion (BIC), as well as their variants.

Another important use of the likelihood penalization is in the context of sparse signal modelling which is intimately related to the model order selection. The basic approach in sparse modelling consists in coming up with an overcomplete representation (1), where the initial number of components L is selected sufficiently high. Through priors $p(\Omega|\alpha)$ (termed sparsity priors in this context) some of the components in the overcomplete representation are then removed during the estimation step, thus implementing model order selection.

The key to both sparsity and model complexity control in Occham's Razor sense lies in the sparsity parameters $\alpha$. The optimal value of $\alpha$ can be found using a Bayesian technique known as the Evidence Procedure (EP), which is an instance of Empirical Bayes methods. The EP allows to estimate $\overline{\alpha}$, also called evidence parameters in this context, from $p(Z \mid \overline{\alpha}) = \int p(Z|\overline{\Omega}, \overline{\alpha}) \, p(\overline{\Omega}| \overline{\alpha}) d\overline{\Omega}$. This function is also known as type-II likelihood function, or model evidence.

In the simplest case both $p(\overline{\Omega}|\overline{\alpha})$ and $p(Z|\overline{\Omega},\overline{\alpha})$ are chosen as Gaussian densities. As a consequence $p(Z/\overline{\alpha})$ can be found in closed form. Prior art only considers models linear in their parameters (here, this will correspond to assuming ( as known and fixed, and thus $\overline{s}(\overline{o}_l) = \overline{s}$ ), L sparsity parameters $\overline{\alpha_1}$, are considered, one for each $\omega_l$. The corresponding log-likelihood penalty is then a simple weighted $1_2$-norm of the weights $\omega_l$: $\Sigma_l \alpha_l \mid \omega_l \mid^2$ .

Such choice leads to the classical Tikhonov regularization with $\alpha_l$ corresponding to multiple regularization constants. It can be shown that in the Gaussian prior case the maximum of the model evidence $p(Z/\overline{\alpha})$ coincides with the Bayesian interpretation of the Normalized Maximum Likelihood model order selection and reduces to the Bayesian Information Criterion (BIC) as the number of measurement samples grows.

The Gaussian EP was studied in the context of wireless channel estimation already. It was established that the EP with a Gaussian prior is only effective in average to high SNR regimes (typically between 12dB to 20dB). In this context also the estimation of multipath gains only was considered, thus bypassing the difficulties due to the nonlinear dependence on the dispersion parameters of (1).

Recently, a large number of works has been dedicated to the study of It-types of penalties, especially within the context of sparse signal processing. The $1_1$-penalty was shown to have a better sparsity property compared to $1_2$. This type of penalty is obtained by choosing $p(\overline{\Omega}|\overline{\alpha})$ as a Laplace prior. Again, for models linear in their parameters this leads to a penalty in the form $\Sigma_1 \overline{\alpha}_l|\omega_l|$ . When $p(Z|\overline{\Omega}|\overline{\alpha}$ is Gaussian, the parameter estimation using the Laplace priors leads to the Least Absolute Shrinkage and Selection Operator (LASSO) regression or soft thresholding, with $\alpha_1$ acting as threshold values. The It-type of penalties significantly limits the analytical analysis of the algorithm; nonetheless for models linear in their parameters a number of efficient numerical techniques have been developed.

Extensions of the Bayesian sparsity methods with Laplace priors applied to the estimation of multipath wireless channels have not been explored yet mainly due to the nonlinearity of the channel model. The estimation of multipath channels by optimizing the squared model misfit with I,-penalization has been employed in prior art. Although similar in spirit, there are several important distinctions from the Bayesian sparsity perspective.

First, a single sparsity parameter was used to balance the model performance with the $1_1$ penalty of the component gains. This invention proposes to use multiple sparsity parameters $\alpha_1$, one for each component, to control the model sparsity on a per-component basis.

Also, in the prior art multipath dispersion parameters are quantized to obtain an overcomplete representation, and then only the component gains co, are estimated; this effectively linearizes the estimation problem. Recent results show that no matter how finely the parameter space is quantized, there will always be a mismatch between the actual channel sparsity and the estimated one; as the result, artificial non-physical multipath components will be introduced.

Third, and most importantly, the optimal balance between the model fit and the 11-penalty (i.e., an equivalent of the sparsity parameters) is determined empirically. As a consequence, the algorithm performance (number of detected components) critically depends on the choice of the regularization parameters. In contrast, the Bayesian techniques offer a consistent way of inferring the optimal balance through the estimation of $_6$.

In the present invention, the Bayesian sparsity methods are combined with the high resolution estimation of the multipath parameters S2 . In order to overcome the computational difficulties due to the nonlinearity of the model, a new Variational Bayesian extension of the Space Alternating Generalized Expectation-Maximization (SAGE) algorithm for multipath parameter estimation is proposed - Variational Bayesian SAGE (VB-SAGE).

The main idea of the VB-SAGE is similar to that of the original SAGE algorithm - by properly introducing hidden data, one can optimize the parameters of the 1-th component only (assuming the parameters of the other components are fixed), while still retaining the monotonicity property of the original SAGE algorithm. VB-SAGE not only simplifies the multipath parameter estimation, but also allows to determine the sparsity parameters $\alpha_l$. As an important consequence, this allows a detailed analysis of the resulting model order selection criteria individually for each multipath component. The Gaussian prior case is revisited and extended from this new perspective, as well as new results for Laplace sparsity priors are presented.

In contrast to the original SAGE algorithm, which only provides point estimates of the component parameters, the VB-SAGE algorithm allows the probability density functions (pdf) of these parameters to be estimated. Furthermore, the VB-SAGE algorithm can be used to estimate the pdfs of the sparsity parameters $\overline{\alpha}$ jointly with the multipath parameters S2 . More specifically, the resulting spare VB-SAGE algorithm approximates the posterior pdf $p$ (S2, MZ) with a proxy pdf q(C2, $_f$) such as to minimize the variational free energy.

Similar to the original SAGE algorithm, the sparse VB-SAGE algorithm relies on the concept of the admissible hidden data - an analog of the complete data in the EM framework - to optimize at each iteration the variational free energy with respect to the pdfs of the parameters of one component only. The Monotonicity Property of the VB-SAGE algorithm guarantees that such optimization strategy necessarily minimizes the free energy. The admissible hidden data also permits a detailed analytical study of the sparsity parameters, which leads to selection criteria applied individually to the multipath component updated at each iteration. Thus, the sparse VB-SAGE algorithm jointly implements the estimation of the number of relevant multipath components and the estimation of the pdfs of the component parameters.

The selection criteria can be adjusted to compensate for model mismatch due to e.g. calibration or discretization errors.

Below, the following notations will be used. Vectors are represented with an arrow on top, e.g., $\bar{x}$, and matrices as uppercase letters, e.g., X. For vectors and matrices $(.)^T$ and $(.)^H$ denote the transpose and Hermitian transpose, respectively; Sets are represented as uppercase letters, e.g., S. The set I is reserved to denote the index set with L elements, i.e. I={1, ..., L}. $\bar{X}_I$ --- $\cup\{\bar{x}_1\}$ denotes a shorthand notation for a list of $\bar{x}_1$, with Indices $l \in I$. When S = $\overline{\{x,\ddot{y},z\}}$ is a set of random variables, then $\overline{S(x)}$ = S/$\{\bar{x}\}$ is the compliment of $\{\bar{x}\}$ in S. Similarly $\overline{I(l)}$ =I/$\{l\}$, and $\overline{S/\{M\}}$ =S/$\{M\}$, for $M \subset$ S . Two types of proportionality are *used:* $x \propto y$ denotes x = ay, and $x \propto^e$ *denotes* $e^x = e^\beta \, e^y$ and thus x = $\beta$ + y, for arbitrary constants $\alpha$, and $\beta$. An estimate of a random variable $\bar{x}$ is denoted as $\bar{x}$. Finally, $E_{qx}\{f(\bar{x})\}$ denotes the expectation of a function f($\bar{x}$) with respect to a probability density q($\bar{x}$); similarly, $Eq_M\{f(\bar{x})\}$ denotes the expectation with respect to the joint probability density q(M) of the random variables in the set M. N($\bar{a}$, B) and CN ($\bar{\alpha}$, B) are used to denote respectively a multivariate real and complex Gaussian pdf with a mean a and a covariance matrix B; G(a,b) denotes a Gamma pdf with parameters a and b.

Channel estimation usually consists of sending a specific sounding sequence s(t) through the channel and observing the response z(t) at the receiving side. The received signal z(t) is then used to estimate the channel impulse response (CIR) and channel parameters.

Without loss of generality, Single-Input Multiple-Output (SIMO) channel models and time-domain channel sounding are considered. In this case the sounding signal s(t) consists of periodically repeated burst waveforms u(t),

i.e., $s(t) = \sum_{i=-\infty}^{\infty} u(t - iT_f)$ , where u(t) has duration $T_u \le T_f$ and is formed as $u(t) = \sum_{m=0}^{M-1} b_m p(t - mT_p)$ . .

Practically, the signal s(t) consists of only a certain finite number of periods of the signal u(t). The known sounding sequence bo ... bm-$_1$ consists of M chips, and p(t) is the shaping pulse of duration $T_p$, with $MT_p=T_u$. Notice that here the time domain channel sounding is used, i.e., a channel model in the time domain is considered. However, the results of the invention can be equally applied to frequency sounding settings, when the channel model is considered in the frequency domain.

Assumingly, the signal vector $\bar{z}$(t) has been received/measured with an array consisting of P sensors located at positions $\bar{d}_0,..., \bar{d}_{p-I} \in$ R$^2$ with respect to an arbitrary reference point. The signal originating from the 1-th propagation path is an altered version of the original transmitted signal weighted by a complex gain o. The alteration process is described by a (non-linear) mapping 8, $_H$ s(t, 9, ) , where *B,* is a vector of dispersion parameters, e.g. relative delay, Doppler shift, azimuth and elevation angles of arrival, etc.

The nonlinear mapping s(t, .) depends also on aperture of the transmitted probing waveform, filtering at the transmitter/receiver side, the particular settings of the sounder, like the number of used antennas or the antenna array geometry. In the following the model will be kept in its most general form and be abstracted from the concrete channel structure where possible.

Additive noise §(t) is assumed to be a zero-mean spatially white Gaussian process with the covariance structure

$$E\left\{\xi_m(t)\xi_k^*(t+\tau)\right\}=\begin{cases} 0 & m \neq k \\ R_\xi(\tau) & m = k \end{cases}, \qquad (2)$$

$$0 \leq k, m \leq P - 1.$$

In the present case it is assumed that $IZ_4(,c)$ is known.

In practice z(t) is low-pass filtered and sampled with the sampling period $T_s$, resulting in P N-tuples, with N being the number of output samples per sensor. By stacking the sampled outputs of the P sensors in one vector z , (1) can be rewritten as

$$\vec{z} = \sum_{l=1}^{L} \omega_l \vec{s}(\vec{\theta}_l) + \vec{\xi}, \qquad (3)'$$

with $\vec{s}(\vec{\theta}_l) = \left[ \vec{s}_0(\vec{\theta}_l)^T, ..., \vec{s}_{P-1}(\vec{\theta}_l)^T \right]^T$ , $\vec{\xi} = \left[ \vec{\xi}_0^T, ..., \vec{\xi}_{P-1}^T \right]^T$ , with

$\vec{s}_p(\vec{\theta}_l) = \left[ s_p(0, \vec{\theta}_l), ..., s_p((N-1)T_s, \vec{\theta}_l) \right]^T$ , and $\vec{\xi}_p = \left[ \xi_p(0), ..., \xi_p((N-1)T_s) \right]^T$ . Finally,

$\vec{\Omega} = \left\{ \omega_1, \vec{\theta}_1, ..., \omega_L, \vec{\theta}_L \right\}.$

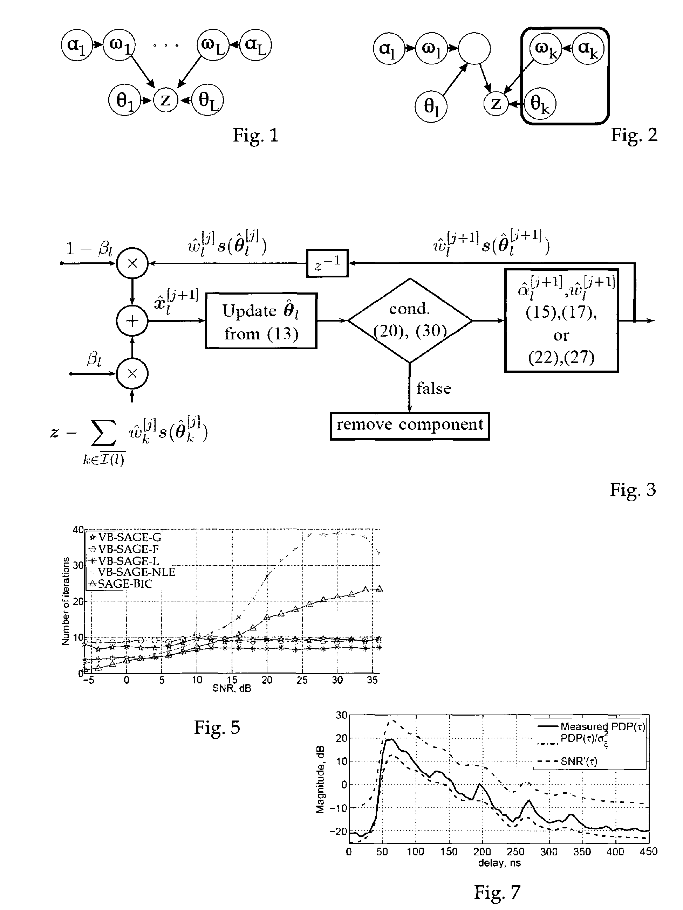

Fig. 1 shows a probabilistic graph which encodes the dependencies between the parameters and the observation model (3). According to the graph structure, the joint density over the graph variables can be factored as $p(i, 0, Cr) = p(z \mid Q)p(C2l \mid \ddot{a})p(\ddot{a})$, where $\overline{\alpha} = [\alpha_1, ..., \alpha_L]^T$. The statistical model behind the involved variables is specified as follows.

Under the Gaussian noise assumption $p(\vec{z} \mid \vec{\Omega}) = CN(\sum_{l=1}^{L} \omega_l \vec{s}(\vec{\theta}_l), \Sigma)$ having a covariance matrix

$\Sigma = E\left\{ \vec{\xi} \vec{\xi}^H \right\}.$ The second term $p(\vec{\Omega} \mid \vec{\alpha})$ is the parameter prior. Its use is a key factor leading to the sparse VB-SAGE algorithm. It is assumed that $p(\overline{\Omega}|\overline{\alpha})$ factorizes as

$$p(\vec{\Omega} \mid \vec{\alpha}) = \prod_{l=1}^{L} p(\omega_l \mid \alpha_l) p(\vec{\theta}_l). \qquad (4)$$

This is an essential simplifying assumption. It is a trade-off between a standard linear signal model and a nonlinear signal model (3), with $p(\vec{\Omega} \mid \vec{\alpha}) = \prod_{l=1}^{L} p(\omega_l, \vec{\theta}_l \mid \alpha_l)$ . As a consequence $p(\omega_1 \mid \alpha_1)$ is a key to the model sparsity. Due to this assumption the resulting sparsification decisions depend mainly on the signal energy, rather than on the signal form, determined by .

In the following, three choices of priors $p(\omega_1 \mid \alpha_1)$ are described: Gaussian, flat and Laplace prior. Gaussian and Laplace priors are both prior functions that are circularly symmetric, with the non-negative hyperparameter $\alpha_1$ being inversely proportional to their width. Thus, large values *of a,* will render the contribution of the signal $\omega_1 \vec{s}(\vec{\theta}_1)$ 'irrelevant', since the corresponding prior over $\omega_1$ will then be concentrated at the origin.

The choice of the priors $p(\vec{\theta}_1)$ and $p(\alpha_1)$ is arbitrary. In the present case, they are chosen as non-informative priors. However, any desired prior can be easily incorporated in the estimation algorithm, as long as it reflects the underlying physics and restrictions of the measurement equipment.

The prior $p(\alpha_1)$ , also called a hyperprior, is selected as a Gamma pdf

$G(a_l, b_l) = \dfrac{b_l^{a_l}}{\Gamma(a_l)} \alpha_l^{a_l-1} \exp(-b_l \alpha_l)$ ; $a_l = b_l = 10^{-6}$ is set for all components to render the prior non-informative, i.e., flat in the log-domain. Such formulation of a hyperprior pdf is related to automatic relevance determination. However, any desired values of $a_i$ and $b_l$ can be used for the estimation.

## PARAMETER ESTIMATION FRAMEWORK

Direct evaluation of $p(\overline{z, \Omega, \alpha})$ , or the posterior $p(\overline{\Omega, \alpha}|z)$ , for obtaining the signal parameters is a nontrivial task. Two main reasons for this are the nonlineartity of the model (1) and the statistical dependence of multipath component parameters when z is observed. Ap-proximative techniques might significantly ease the model fitting step. The present work resorts to the variational Bayesian inference framework. The latter generalizes the classical Expectation-Maximization (EM) algorithm and provides a tool for estimating distributions of model parameters $\{\overline{\Omega, \alpha}\}$. Essentially, variational

methods approximate the density function of interest with a simpler one (by, e.g., neglecting some statistical dependencies between random variables) such that the Kullback-Leibler divergence between the two is minimized.

When estimating parameters using the SAGE algorithm, the concept of complete data in the EM-algorithm is replaced by that of admissible hidden data. Admissible hidden data allows optimizing only a subset of parameters at each iteration. The selection of the hidden data guarantees that the likelihood of the new parameter update (obtained by replacing in the overall parameter set the updated subset) cannot be smaller than the likelihood prior to the update iteration. This property is referred to as the Monotonicity Property. The concept of admissible hidden date can be exploited within the variational framework as well. As will be shown, this leads to an iterative algorithm - the Variational Bayesian SAGE algorithm - that still exhibits the Monotonicity Property in terms of the variational free energy.

For a specific component 1 the new variable

$$\vec{x}_l = \omega_l \vec{s}(\vec{\theta}_l) + \vec{\xi}_l \tag{5}$$

is considered, which is a received signal associated with the 1-th propagation path. The additive noise component , in (5) is obtained by arbitrarily decomposing the total noise, such that $\Sigma_l = E\{\vec{\xi}_l \vec{\xi}_l^H\} = \beta_l \Sigma$, and $0 \le \beta_l \le 1$. The part of the total additive noise that is not associated with the 1-th component thus has a covariance matrix defined as $\Delta_l = (1 - \beta_l)\Sigma$. Thus, $\Delta_l + \Sigma_l = \Sigma$.

The modified graph that accounts for the hidden data xi is depicted in Fig. 2. It is straightforward to show that $x_1$ is an admissible hidden data for estimating $\{\omega_l, \vec{\theta}_k, \alpha_k\}$, $k \in \overline{I(l)}$. As a consequence, the estimation algorithm can be formulated as a succession of L less complex estimations of $\{\vec{\theta}_1, \omega_1, \alpha_1\}$ with respect to $x_1$, assuming that $\{\omega_k, \vec{\theta}_k, \alpha_k\}, k \in \overline{I(l)}$ are known and fixed. According to the extended graph in Fig. 2, the joint density of $p(\overline{z, x_1, \Omega, \alpha})$ factors as

$$p(\vec{z} \mid \vec{x}_l, \vec{\theta}_{\overline{I(l)}}, \omega_{\overline{I(l)}}) \prod_{k \in I(l)} p(\vec{\theta}_k) p(\omega_k \mid \alpha_k) p(\alpha_k) \times p(\vec{x}_l \mid \omega_l, \vec{\theta}_l) p(\omega_l \mid \alpha_l) p(\vec{\theta}_l) p(\alpha_l), \tag{6}$$

where

$$\vec{z} \mid \vec{x}_l, \vec{\theta}_{\overline{I(l)}}, \omega_{\overline{I(l)}} \sim CN\left(\vec{z} - (\vec{x}_l + \sum_{k \in I(l)} \omega_k \vec{s}(\vec{\theta}_k)), \Delta_l\right), \tag{7}$$

and $\bar{x}_{l \, W} p \ddot{O}_i - CN (, s (9, ), E, )$ . One of the limitations of the EM and SAGE algorithms is that the algorithms only provide point estimates of the parameters of interest.

In contrast, variational methods allow parameter pdf's to be estimated. Essentially, variational inference aims at approximating the density of interest, i.e. $p(\overline{\Omega, \alpha, x_1, z})$ in the present case, with a proxy pdf $q(\overline{\Omega, \alpha, x_1})$. The latter is typically a free design parameter, and is usually chosen to have a simple factorization. Combination of the concept of admissible hidden data with the variational inference framework leads to the Variational Bayesian SAGE algorithm.

The next section outlines the main principles behind the VB-SAGE algorithm for estimating multipath wireless channels.

## VARIATIONAL BAYESIAN INFERENCE OF SIGNAL PARAMETERS

Bayesian variational inference is a family of techniques that exploit analytical approximations of the posterior distribution of interest, i.e. p(S2, z'), using a simpler proxy pdf q(S2,a) . This pdf is estimated as a minimizer of the variational free energy F(q(K2,&)llp(C2,&,i)), which is formally equivalent to the Kullback-Leibler divergence DK (q('2' a)II p(S2' a' Z )) of the proxy pdf from the true joint pdf. The admissible hidden data, used in the SAGE algorithm to facilitate the maximization of the parameter likelihood, can also be used within the variational inference framework to ease the minimization of the variational free energy. Such algorithm is termed a Variational Bayesian SAGE (VB-SAGE) algorithm.

Essentially, the VB-SAGE algorithm approximates p(S2, ii, x¡, z ) with a variational proxy pdf

$$p(\vec{\Omega}, \vec{\alpha}, \vec{x}_l) = q(\vec{x}_l)\prod_{k=1}^{L} q(\omega_k)q(\vec{\theta}_k)q(\alpha_k)$$ (8)

by performing minimization of the free energy with respect to the parameter of the 1-th component only, and cycling through all L components in a "round robin"-fashion. The monotonicity property of the VB-SAGE algorithm ensures that such sequential optimization necessarily minimizes the free energy $F(q(\widetilde{\Omega,\alpha})||p(\widetilde{\Omega,\alpha,z}))$ .

It is straightforward to show that with the factorization (8) the estimation of any factor q(a), $a \in \left\{\omega_l, \breve{\vec{\theta}}_l, \alpha_l, \vec{x}_l\right\}$, requires knowing the Markov blanket MB(a) of a. Define $\bar{p}$ ($\alpha$) as follows:

$$\tilde{p}(a) \propto \exp\left(E_{qMB(a)}\{\log p(a \mid MB(a))\}\right).$$ (9)

The unconstrained solution for q(a) that minimizes the corresponding free energy is then simply found as $q(\alpha) = \bar{p}(\alpha)$ .

Clearly, an unconstrained solution is preferred; however, q(a) might be constrained to belong to some class of density functions Q(a) to make the optimization tractable. Then the solution is obtained by solving

$$q(a) = \arg\min_{q^*(a) \in Q(a)} D_{KL}(q^*(a) \| \tilde{p}(a)) .$$ (10)

In the case of $\bar{x}$, it is straightforward to show that $\bar{p}$ ($\bar{x}_1$) is quadratic in $\bar{x}_1$; therefore $\bar{p}$ ($\bar{x}_1$ ) is a Gaussian pdf. Thus, Q($\bar{x}_1$ ) is selected as the set of Gaussian pdfs, and $q(\bar{x}_1) = CN(\hat{\bar{x}}_l, \hat{S}_l^x)$ , , where CN(.,.) is a multivariate complex normal pdf, centered at $\bar{x}_1$ , and having covariance matrix This choice guarantees the monotonicity of the VB-SAGE algorithm.

Similarly, Q($\omega_1$) is selected as the set of Gaussian pdfs, and $q(\omega_1) = CN(\overline{\omega}_1, \overline{\Phi}_1); q(\omega_l) \equiv \bar{p}(\omega_1)$ holds only when the prior $p(\omega_1|\alpha_1)$ is Gaussian and $s(\overline{\theta}_1)$, $l \in I$ , are fixed.

For the sparsity parameters 6), Q($\alpha_1$) is selected as the set of Gamma pdfs, and $q(\alpha_1) = G(\hat{a}_1, \hat{b}_1)$. This choice is dictated by a Gamma distribution being a conjugate prior for the inverse variance of a normal distribution; as a result, in the Gaussian prior case $q(\alpha_1) = p(\alpha_1)$ As a single exception, Q($\overline{\theta}_1$) is selected as the set of Dirac measures on the range of $\theta_1$ , and thus $q(\overline{\theta}_1) = \delta(\overline{\theta}_1 - \overline{\theta}_1)$ . Thus, the dispersion parameters are restricted to point estimates. The parameters $\hat{\bar{x}}_l, \hat{\bar{S}}_l^x, \hat{\theta}_l, \hat{\alpha}_l, \hat{S}_l^\alpha, \hat{\omega}_l,$ and $\overline{\Phi_1}$ are called variational parameters. Obviously, knowing the density q(.) translates into knowing the corresponding variational parameters.

## VARIATIONAL ESTIMATION EXPRESSIONS

Just like SAGE, the VB-SAGE algorithm is implemented in a sequential manner. For the model with L signal components, starting point is 1=1 and update factors $q(\bar{x}_1), q(\overline{\theta}_1), q(\omega_1)$, and $q(\alpha_1)$ related to the 1-th component, assuming the approximating factors for the other components are fixed and known. In the same fashion the component 1=2 is updated, until all L components are considered. Then the update iterations repeat anew until convergence. In the following, only estimating the factors related to the 1-th signal component are considered. The corresponding expressions provide parameter updates at iteration j+1, assuming that at iteration j the required q(.) factors are known. For updating q(a), $\alpha \in \{\omega_1, \overline{\theta}_1, \alpha_1, \overline{x}_1\}$ the required factors are those of the elements in MB(a).

Estimation of $q(\overline{x}_1)$ :

From the graph in Fig. 2 it can be concluded that $MB(\vec{x}_l) = \{\vec{z}, \theta_l, \omega_l\}$. Evaluating (9) in this case leads to

$$\tilde{p}(\vec{x}_l) \propto p(\vec{z} \mid \vec{x}_l, \hat{\overline{\theta}}_{\overline{I(l)}}, \hat{\omega}_{\overline{I(l)}}) p(\vec{x}_l \mid \hat{\omega}_l, \hat{\overline{\theta}}_l) . \tag{11}$$

Estimating $q(\vec{x}_l) = CN(\hat{\overline{x}}_l, \hat{\overline{S}}_l^x)$ requires the mean $\overline{x}_1$ and covariance $\overline{S}$ of (11) to be estimated. By observing that the right-hand side of (11) is a product of Gaussian pdfs, the corresponding estimation expressions for $\overline{x}_1$ and $\overline{S}$ are given by

$$\hat{\overline{x}}_l' = \hat{\omega}_l \vec{s}(\hat{\overline{\theta}}_l) + \beta_l \left( \vec{z} - \sum_{k=1}^L \hat{\omega}_k \vec{s}(\hat{\overline{\theta}}_k) \right), \text{ and}$$

$$(\hat{\overline{S}}_l^x)' = (\Delta_l^{-1} + \Sigma_l^{-1})^{-1} . \tag{12}$$

The residual $\beta_l \left( \vec{z} - \sum_{k=1}^L \hat{\omega}_k \vec{s}(\hat{\overline{\theta}}_k) \right)$ can be understood as the estimation of the noise associated with the 1-th component. The expression for the mean x, in (12) is identical to that obtained in the SAGE algorithm.

Considering the limiting case as $\beta_l \to 1$, this is equivalent to assuming that $\vec{x}_l = \vec{z} - \sum_{k \in \overline{I(l)}}^L \omega_k \vec{s}(\vec{\theta}_k)$, , which was used as a hidden data in prior art. In this case $\left( \hat{\overline{S}}_l^x \right)' \to 0$, i.e., q($\vec{x}_l$) collapses to a Dirac distribution, and E, 1. Further on, the choice $\beta_1 = 1$ will be adopted.

Estimation of $q(6, )$ :

The Markov blanket of 9, is $MB(\overline{\theta}_1) = \{\omega_1, \overline{x}_1\}$. Here the estimation algorithm profits from the usage of the hidden data x, . Due to the selected constraint for $q(9, ) (q(1) = 8(e, - B, ))$ finding 0, reduces to maximization of the right-hand side of (9). Noting that $p(\overline{\theta}_1|\omega_1, \overline{x}) \propto p(\overline{x}|\overline{\theta}_1, \omega_{\overline{1}}) p(\overline{\theta}_1)$ results in

$$\hat{\overline{\theta}}_l' = \arg\max_{\overline{\theta}_l} \left\{ \log p(\vec{\theta}_l) + \log p(\hat{\overline{x}}_l' \mid \vec{\theta}_l, \hat{\omega}_l) - \hat{\Phi}_l \vec{s}(\vec{\theta}_l)^H \sum_l^{-1} \vec{s}(\vec{\theta}_l) \right\}. \tag{13}$$

Due to q($\omega_1$) being a gaussian pdf, (13) includes a Tikhonov-like regularization term <PI $S(\ddot{O}_i)H$ LI $s(\ddot{O}_i)$ with the posterior variance 4$ j of 0), acting as a regularization constant. Unfortunately, since s($\overline{\theta}_1$) depends nonlinearly on $O_i$, (13) has to be optimized numerically.

Typically $q(9) = q(0_{1/})... q(6M)$ , where M is the number of dispersion parameters describing a multipath component. Such factorization is not critical. If some of the dispersion parameters are correlated, this can be reflected in the appropriate factorization of the $q(B, )$ . Estimating $B''_1$, can be done by evaluating (9) using $MB\{OI1I_i\}= MB9$, U $\{\theta_1 \setminus \theta_{ml}\}$ and performing a simple line search of the resulting objective function.

The same assumption underpins the SAGE-based estimation of $\overline{\theta}_1$. The VB-SAGE estimation expression for $B_i$ in (13) will coincide with those of the standard SAGE when $p(9, )$ is assumed non-informative (i.e., flat in log-domain)

and I\$j 0 , i.e., when —> *8(C )* .

Estimation of *q()*:

The Markov blanket for ᑫ is $MB_{(N)}$ *a, 1*. Evaluating (9) leads to $p_l) \propto p(x \mid \omega_l \mid \alpha_l )$. For some choices of $p({}^q_l a_l)$ the moments of *q() = CN(, <pj)* can be either found in closed form, or efficiently approximated. The estimation of these moments is done below where different priors $p(\omega_l \mid \alpha_l )$ are discussed.

Estimation of *q(a )* :

Here, the Markov blanket is *MB(aj ) = {$\omega_1$}*. In contrast to $q(\overline{\theta}_1)$ and *(6)*, the hidden data $x_l$ is not in *MB(a, )* . This is the result of the Markov chain $a_j j_{c_l}$; in fact, ᑫ is the admissible hidden data for estimating $\alpha_1$ since $p(x_l, \omega_l \mid \alpha_1, \overline{\theta}_1) = p({}_3c, wp\tilde{O}_l)p(w_i 1 \mid \overline{\alpha}_1)$ due to the factorization (6). By noting that $l?(or, 6J)$ « $p(c_0 l \mid a_l)p(a_l)$, (9) can be rewritten as

$$\log \tilde{p}(\alpha_l) \propto^e \log p(\alpha_l) + \int q(\omega_l) \log p(\omega_l \mid \alpha_l) d\omega_l . \qquad (14)$$

Due to the selected constraint q(a, ) = G(âpb_l), the variational parameters 6, and L, are found from (14) by equating the moments of $q(\hat{\alpha}_1)$ and fi(9_j ) . The estimation of *q(9j )* leads to the sparse VB-SAGE algorithm; it is this property that allows joint model order selection and parameter estimation.

Expression (14) embodies the Bayesian sparse modelling. The sparsity prior $p(\omega_1 \mid \alpha_1)$ is a key to the sparsity parameters estimation. In the following, several choices of $p(\omega_1 \mid \alpha_1)$ are considered and their effects on sparsity-based model order selection are analyzed.

SPARSITY PRIORS FOR MODEL ORDER SELECTION

In the following, three choices for the sparsity prior $p(\omega_1 \mid \alpha_1)$ are considered: i) a Gaussian prior, which leads to the $1_2$-type of log-likelihood penalty, ii) a flat prior, obtained as a limiting case of the Gaussian prior when $\alpha_{1\rightarrow} 0$, and iii) a Laplace prior, which results in the $1_1$-type log-likelihood penalty.

GAUSSIAN PRIOR

The Gaussian sparsity prior is obtained by selecting $p(\omega_l \mid \alpha_l) = CN(0, \alpha_l^{-1})$ .. With this choice it is straightforward to show that the variational parameters of $q(\omega_1)$ are given by

$$\hat{\Phi}_l^{'} = (\hat{\alpha}_l + \vec{s}(\hat{\bar{\theta}}_l^{'})^H \sum_l^{-1} \vec{s}(\hat{\bar{\theta}}_l^{'}))^{-1} ,$$

$$\hat{\omega}_l^{'} = \hat{\Phi}_l^{'} \vec{s}(\hat{\bar{\theta}}_l^{'}) \sum_l^{-1} \hat{\bar{x}}_l^{'} . \qquad (15)$$

(15) is just a regularized least-squares estimate of $\hat{a}_J$; given $\overline{x_1}$, $\overline{\theta_1}$, and the regularization parameter $\hat{\alpha}_l = E_{q(\alpha_l)}\{\alpha_l\} = \hat{a}_l / \hat{b}_l$ (from the properties of the Gamma distribution).

Now, the variational parameters $\hat{a}_1$, and $\overline{b}_1$, of $q(\hat{a}_1)$ are found from (14). This requires trivial integration over $\omega_1$. The estimation expressions for the moments of $q(\alpha_1)$ are given as

$$\hat{a}_l^{'} = a_l + 1 , \ \hat{b}_l^{'} = b_l + (|\hat{\omega}_l^{'}|^2 + \hat{\Phi}_l^{'}) . \qquad (16)$$

The updated mean of the Gamma pdf *q(a)* is computed as $\hat{\alpha}_l^{'} = \hat{a}_l^{'} / \hat{b}_l^{'}$ . . (16) is now analyzed in more detail for the case $a_1 = b_1 = 0$, i.e. when $p(\alpha_1)$ is non-informative. In this case the mean of $q(\alpha_1)$ is given as

$$\hat{\alpha}_l^{'} = \frac{1}{\left|\hat{\omega}_i^{'}\right|^2 + \hat{\Phi}_l^{'}} . \tag{17}$$

Both $\omega_1$ and $\overline{\Phi}_1$ are estimated using the admissible hidden data $\overline{x}_1$, The updating steps in (15) and (17) can be alternatively repeated, while keeping $\hat{\overline{x}}_l^{'}$ and $\overline{\theta}_1$ , fixed to generate a sequence $\left\{\hat{\alpha}_l^{[m]}\right\}_m$ ,, " where $\hat{\alpha}_l^{[0]} = \hat{\alpha}_l$ , $\hat{\alpha}_l^{[1]} = \hat{\alpha}_l^{'}$ , $\hat{\alpha}_l^{[2]} = \hat{\alpha}_l^{''}$ , etc. This makes sense since neither $\overline{x}_1$ nor $\theta_1$ are in the MB($\alpha_1$). Therefore, the corresponding sequence of pdfs $\left\{q(\alpha_l) = G(\hat{a}_l^{[m]}, \hat{b}_l^{[m]})\right\}_m$ necessarily monotonically decreases the variational free energy with respect to q($\alpha_1$) . Let $\hat{\alpha}_l^{[\cdot]}$ be the stationary point of the sequence $\left\{\hat{\alpha}_l^{[m]}\right\}_m$ when m $\to\infty$. In order to simplify the notation the following definition is used: $\hat{\overline{s}}_l \equiv \overline{s}\left(\hat{\overline{\theta}}_l\right)$ . Substituting (15) into (17) and solving for $\hat{\alpha}_l^{[\infty]}$ yields

$$\hat{\alpha}_l^{[\infty]} = \frac{(\hat{\overline{s}}_l^H \sum_l^{-1} \hat{\overline{s}}_l)^2}{\left|\hat{\overline{s}}_l^H \sum_l^{-1} \hat{\overline{x}}_l\right|^2 - \hat{\overline{s}}_l^H \sum_l^{-1} \hat{\overline{s}}_l} . \tag{18}$$

By definition $\hat{a}^{[\infty]} > 0$, which is satisfied only when

$$\left|\hat{\overline{s}}_l^H \sum_l^{-1} \hat{\overline{x}}_l\right|^2 > \hat{\overline{s}}_l^H \sum_l^{-1} \hat{\overline{s}}_l . \tag{19}$$

By interpreting (17) as a nonlinear dynamic map that at the iteration m maps $\hat{\alpha}_1^{[m]}$ into $\hat{a}_f^{m+l}$, it can be shown that for $\left|\hat{\overline{s}}_l^H \sum_l^{-1} \hat{\overline{x}}_l\right|^2 \leq \hat{\overline{s}}_l^H \sum_l^{-1} \hat{\overline{s}}_l$ the fixed point of the map is at infinity, i.e., $\hat{\alpha}_f^{[\infty]} = \infty$ . As a result, the corresponding signal contribution can be removed from the model.

This allows implementing model order selection during parameter update iteration, i.e., pruning a multipath component, while still minimizing the variational free energy.

The inequality (19) might at first glance seem a bit counter-intuitive - the quadratic quantity on the right-hand side is compared to the fourth-power quantity on the left-hand side. In order to better understand the meaning of it, both sides of (19) are divided by $(\hat{\alpha}_l^{[\infty]} + \hat{\overline{s}}_l^H \sum_l^{-1} \hat{\overline{s}}_l)^2$ .

It follows that (19) is equivalent to

$$\left|\hat{\omega}_f^{[\infty]}\right|^2 > \gamma_l \frac{1}{\hat{\alpha}_l^{[\infty]} + \hat{\overline{s}}_l^H \sum_l^{-1} \hat{\overline{s}}_l} = \gamma_l \hat{\Phi}_l^{[\infty]} , \tag{20}$$

where $\gamma_l = \dfrac{\hat{\overline{s}}_l^H \sum_l^{-1} \hat{s}_l}{\hat{\alpha}_l^{[\infty]} + \hat{s}_l^H \sum_l^{-1} \hat{s}_l} \leq 1$ . The left-hand term in (20) is an estimate of the posterior variance of $\omega_1$, scaled

by $y_1$. This result leads directly to several important observations:

1) The sparsity parameter $\hat{\alpha}_l^{[\infty]}$ of signal component 1 with $\left|\hat{\omega}_l^{[\infty]}\right|^2$ below its posterior variance $\hat{\Phi}_l^{[\infty]}$ scaled by z is infinite, and thus such components can be removed from the model.

2) By multiplying both sides of (20) with $\hat{\bar{s}}_l^H \sum_l^{-1} \hat{\bar{s}}_l$ ,it is shown that this inequality is equivalent to

$\left|\hat{\omega}_l^{[\infty]}\right|^2 \hat{\bar{s}}_l^H \sum_l^{-1} \hat{\bar{s}}_l > \gamma_l^2$ ; the left-hand side of this inequality is the signal-to-noise ratio $\text{SNR}_1 = \left|\hat{\omega}_l^{[\infty]}\right|^2 \hat{\bar{s}}_l^H \Sigma_l^{-1} \hat{\bar{s}}_l$ of the 1-th component. Thus the condition (19) (and (20)) corresponds to keeping components with $\text{SNR}_{1 >} y_1{}^2$ .

3) Condition (19) can be tuned to retain the component provided its SNR, is above some predefined level *SNR'* $\geq \gamma_l^2$ using a modified condition

$$\left|\hat{\bar{s}}_l^H \sum_l^{-1} \hat{\bar{x}}_l\right|^2 > \hat{\bar{s}}_l^H \sum_l^{-1} \hat{\bar{s}}_l \times \frac{SNR'}{\gamma_l^2} . \tag{21}$$

These results yield the required instruments to determine whether a component 1 with the sparsity parameter $\alpha_1$ should be updated or pruned: if the component 1 fails to satisfy (19), it is removed since for $\hat{\alpha}_l^{[\infty]} \to \infty$, $\hat{\omega}_l^{[\infty]} \to 0$. In case of (21) the component is removed if its $\text{SNR}_1$ is below some level SNR'.

The obtained results allow to interpret" the sparsity parameter $\alpha_1$, in terms of $\text{SNR}_1$. Thus, model order selection (sparsification) can be realized using simple SNR-guided decisions. The analysis of (18) is possible only due to the use of the admissible hidden data $\bar{x}_1$ . The sparse VB-SAGE algorithm with Gaussian sparsity priors and model order selection scheme that makes use of (19) or (21) is termed VB-SAGE-G algorithm.

FLAT PRIOR

In the case where $p(\omega_1|\alpha_1)$ is chosen to be non-informative the Bayesian sparsity can still be used to estimate the model order. This can be done by using the VB-SAGE-G algorithm in the limiting case as $\hat{\alpha}_l \to 0$ (i.e., $\hat{a}_l = const.$, $\hat{\bar{b}}_l \to \infty$). Due to the structure of the graph in Fig. 2, this will only affect the posterior statistics of $\omega_1$ , which remain identical to (15) with $\bar{\alpha}_1 = 0$ . Clearly, in this case $y_1 = 1$, and condition (20) corresponds to sparsification of the components with $\text{SNR}_1 > 1$; in other words, all components with SNR above 0 db are kept. Such model order selection scheme is termed flat condition method, or VB-SAGE-F algorithm. Condition (21) can also be used in the VB-SAGE-F case.

LAPLACE PRIORS (SOFT THRESHOLDING)

As the last choice a Laplace prior $p(\omega_1|\alpha_1)$ is considered. As mentioned before, such priors lead to the $1_1$-type penalty of the parameter log-likelihood, which produces more sparse models due to the geometry of It penalty. An analogous Laplace prior in the complex domain defined as

$$p(\omega_l \mid \alpha_l) = \frac{2\alpha_l^2}{\pi} \exp(-2\alpha_l \mid \omega_l) \tag{22}$$

will be used. Unfortunately, the selection (22) limits the analytical tractability of the estimation procedure. Still, the mean of $q(\omega_1)$ can be obtained in closed form:

$$\hat{\omega}_l ' = sign(\bar{s}(\hat{\bar{\theta}}_l \, ')^H \sum{}_l^{-1} \hat{\bar{x}}_l \, ') \times \frac{\max\left(0 \, \big| \, \big| \bar{s}(\hat{\bar{\theta}}_l \, ')^H \sum{}_l^{-1} \hat{\bar{x}}_l \, \big| - \hat{\alpha}_l \right)}{\bar{s}(\hat{\bar{\theta}}_l \, ')^H \sum{}_l^{-1} \bar{s}(\hat{\bar{\theta}}_l \, ')} . \qquad (23)$$

Here sign(.) is the sign function defined as sign(x)=x/|x|. Expression (23) is also known as a soft thresholding rule. As far as is known no closed form expression for the posterior variance exists.

However, it can be approximated with the result obtained for the real-valued $\omega_1 \# 0$, which is given as:

$$\hat{\Phi}_l ' \approx (\bar{s}(\hat{\bar{\theta}}_l ')^H \sum{}_l^{-1} \bar{s}(\hat{\bar{\theta}}_l '))^{-1} . \qquad (24)$$

It can be shown that (23) is a special case of the semismooth Newton algorithm applied to the estimation of q with It-type of sparsity constraints. The semismooth Newton algorithm is a numerical technique used to find zeros of a non-differentiable function. This function, however, must satisfy the semismooth property. It can be shown that the resulting objective function for $\bar{\omega}_1$ is semismooth. The semismooth Newton algorithm is known to exhibit superlinear convergence, which translates into the superlinear convergence of the $\omega_1$, estimation expressions.

Now, the estimation of the sparsity parameters is considered. Plugging (22) in (14), and ignoring terms independent of $\alpha_l$, yields $\log \tilde{p}(\alpha_l) \propto^e \log p(\alpha_l) + 2\log\alpha_l - 2\alpha_l E_{q(w_l)}\{|\omega_l|\}$. Since $q(\omega_1)$ is Gaussian, $|\omega_1|$ is Rice-distributed with distribution parameters given by $|\hat{\omega}_l|$ (eq. (23)), and $\sqrt{\hat{\Phi}_l '/2}$ (eq. (24)). The expectation $E_{q(w_l)}\{|\omega_l|\}$ is given as $\sqrt{\hat{\Phi}_l '\pi/4} L_{1/2}(-|\hat{\omega}_l '|^2/\hat{\Phi}_l ')$, where $L_v(x)$ denotes the Laguerre polynomial with degree v. To simplify the estimation of $q(\alpha_1)$, an approximation of $E_{q(w)}\{|\omega_l|\}$ as $|\hat{\omega}_l '|^2/\hat{\Phi}_l ' \to \infty$ is considered. This approximation is equivalent to assuming a high precision estimate of $\omega_1$. In this case $E_{q(w_l)}\{|\omega_l|\} = |\hat{\omega}_l '|$. Then, it is straightforward to show that

$$\hat{a}_l ' = a_l + 2 , \ \hat{b}_l ' = b_l + 2|\hat{\omega}_l '| \qquad (25)$$

with the mean of $q(\alpha_1)$ given as $\hat{\alpha}_l ' = \hat{a}_l '/\hat{b}_l '$. When a non-informative prior $p(\alpha_1)$ is selected, the update expression of the mean $\hat{\alpha}_l '$ simplifies to

$$\hat{\alpha}_l ' = 1/|\hat{\omega}_l '| . \qquad (26)$$

Similar to the Gaussian prior case the stationary point $\hat{\alpha}_l^{[\infty]}$ of (24) is analyzed. To this end further notations are simplified as follows: $\hat{\bar{s}} \equiv \bar{s}(\hat{\bar{\theta}}_l)$. Combination of (26) and (23) leads to

$$\hat{\alpha}_l^{[\infty]} = \frac{\hat{\bar{s}}_l^H \sum_l^{-1} \hat{\bar{s}}_l}{\max(0, \left|\hat{\bar{s}}_l^H \sum_l^{-1} \hat{\bar{x}}_l\right| - \alpha_l^{[\infty]})} . \tag{27}$$

Assuming that $\left|\hat{\bar{s}}_l^T \sum_l^{-1} \hat{\bar{x}}\right| > \alpha_l^{[\infty]}$ (otherwise $\alpha_l^{[\infty]} = \infty$), (27) is solved for $\alpha_l^{[\infty]}$. Doing so yields two solutions:

$$\alpha_{l,+}^{[\infty]} = \frac{1}{2}\left(\left|\hat{\bar{s}}_l^H \sum_l^{-1} \hat{\bar{x}}\right| + \mu_l\right), \tag{28}$$

$$\alpha_{l,-}^{[\infty]} = \frac{1}{2}\left(\left|\hat{\bar{s}}_l^H \sum_l^{-1} \hat{\bar{x}}\right| - \mu_l\right), \tag{29}$$

where $\mu_l = \sqrt{\left|\hat{\bar{s}}_l^H \sum_l^{-1} \hat{\bar{x}}\right|^2 - 4\hat{\bar{s}}_l^H \sum_l^{-1} \hat{\bar{s}}_l}$. Furthermore, it can be seen that the fixed points are real only when

$$\left|\hat{\bar{s}}_l^H \sum_l^{-1} \hat{\bar{x}}_l\right|^2 > 4\hat{\bar{s}}_l^H \sum_l^{-1} \hat{\bar{s}}_l . \tag{30}$$

Components that do not satisfy (30) are then removed from the model. Both fixed points are feasible. Empirically, it was observed that when the initial value of $\hat{\alpha}_l$ vanishes, i.e., initial $\overline{\alpha}_1$ and $\overline{b}_1$, are chosen such that $\overline{\alpha}_1 = 0$, iterations (26) either diverge ($\hat{\alpha}_l^{[\infty]} = \infty$) or converge to the closest (smallest) feasible solution given by (29). The properties of the second stationary point are subject to further investigations and not dealt with here.
This model order estimation scheme with Laplace sparsity priors that makes use of (30) for model order selection is termed VB-SAGE-L algorithm. It can be similarly shown that (29) is equivalent to

$$\left|\hat{\omega}_l^{[\infty]}\right|^2 > 4\gamma_l^2 \frac{1}{\hat{\bar{s}}_l^H \sum_l^{-1} \hat{\bar{s}}_l} = 4\gamma_l^2 \hat{\Phi}_l^{[\infty]}, \tag{31}$$

where $\gamma_l = \dfrac{\left|\hat{\bar{s}}_l^H \sum_l^{-1} \hat{\bar{x}}_l\right| - \alpha_l^{[\infty]}}{\left|\hat{\bar{s}}_l^H \sum_l^{-1} \hat{\bar{x}}_l\right|} \leq 1$. In the same way it can be shown that (30) and (31) are equivalent to keeping

components with SNR$_1 > 4y^2{}_1$, where SNR$_1 = \left|\hat{\omega}_l^{[\infty]}\right|^2 \hat{\bar{s}}_l^H \sum_l^{-1} \hat{\bar{s}}_l$ is the component SNR. (30) and (31) are the Laplace-prior equivalent conditions of (19) and (20) respectively for the Gaussian prior.
Although the pruning conditions are formally similar, they differ in their numerical values: the moments of $q(\omega_1)$ are estimated differently for the VB-SAGE-L and VB-SAGE-G schemes; as a result, the estimates of the admissible

hidden data $x_1$ for the VB-SAGE-L and VB-SAGE-G algorithms are also different; in addition, the scaling factor $\gamma_1$ in (31) is computed differently from that in (20).

. It should also be mentioned that as $\alpha_1 \longrightarrow 0$, the VB-SAGE-L algorithm converges to the VB-SAGE-F algorithm.

Similarly, (30) can be tuned to keep components with an $SNR_l$ above some predefined level $SNR' \geq 4\gamma^2$ using the modified condition

$$\left| \hat{\vec{s}}_l^H \sum_l^{-1} \hat{\vec{x}}_l \right|^2 > \hat{\vec{s}}_l^H \sum_l^{-1} \hat{\vec{s}}_l \times \frac{SNR'}{\gamma_l^2}. \tag{32}$$

### SUMMARY OF THE METHOD

The main steps of the proposed method are as follows: At iteration j the approximating factors $q(\vec{x}_l)$, $q(\vec{\theta}_l)$, $q(\omega_l)$, and $q(\alpha_l)$, $l \in \left\{ 1, ..., \hat{L} \right\}$, are known for all $\bar{L}$ components, and that the factors $q(\vec{x}_l)$, $q(\vec{\theta}_l)$, $q(\omega_l)$, and $q(\alpha_1)$ of the 1-th component will be updated. A simplified block diagram of an iteration for a single component is shown in Fig. 3. An update cycle includes L iterations, each for each multipath component.

The complete algorithm consists in repeating the update cycles until the number of components and their parameters converge. During the update cycle the number of components might be reduced, which leads to a more sparse channel model. As the model fit improves, some of the components are pruned using condition (19), or (30), i.e. the components for which $\hat{\alpha}_l^{[\infty]} = \infty$ are removed; alternatively, conditions (20), or (31), are used if a detector with a certain sensitivity SNR' is desired. Model order can also be increased by adding new components.

### ALGORITHM INITIALIZATION

A preferred variant of the invention uses a simple bottom-up initialization strategy. It allows to infer the initial variational approximation from the measurements $\bar{Z}$ by starting with an empty model, i.e., assuming all variational parameters to be 0. The first component is initialized by letting $\hat{\vec{x}}_1' = \vec{z}$ and applying an initialization loop as shown in the following:

Initial residual: $\hat{\vec{x}}_1' \leftarrow \vec{z}$, $l = 1$, $\hat{\vec{\theta}}_l = 0$, $\hat{\omega}_l = 0$, $\hat{\alpha}_l = 0$; while Continue initialization do

$$\text{Initialize } \hat{\vec{\theta}}_l' \text{ as } \hat{\vec{\theta}}_l' = \arg \max \frac{\left| \vec{s}(\vec{\theta}_l)^H \sum_l^{-1} \hat{\vec{x}}_l' \right|}{\vec{s}(\vec{\theta}_l)^H \sum_l^{-1} \vec{s}(\vec{\theta}_l)}$$

if (19), (30) are true then        Estimate

$\hat{\alpha}_l'$, $\hat{\omega}_l$ from (15), (18), or (23), (29)

$l \leftarrow l + 1$

$$\hat{\vec{x}}_l' \leftarrow \vec{z} - \sum_{k=1}^{l-1} \hat{\omega}_k' \vec{s}(\hat{\vec{\theta}}_k'),$$

else
        No components, stop initialization
end if
end while

Using $\hat{\vec{x}}_l'$, the signal dispersion parameters $\hat{\vec{\theta}}_l'$, are estimated, and the obtained estimate of $\vec{s}(\hat{\vec{\theta}}_l')$ is plugged in (19) (in the Gaussian prior case), or in (30) (in the Laplace prior case) to determine whether this component should be kept in the model. When the testing fails, the initialization stops.

Otherwise, $\omega_1$ and $\alpha_1$, are estimated solving (15) and (18) for the Gaussian prior, or (23) and (29) for the Laplace prior, respectively. It should be stressed that the use of conditions (19), (30) during the initialization is optional and may be omitted if an overcomplete channel representation is desired. The components with large sparsity parameters will then be pruned at later stages during the update iterations. In the same fashion the 1-th signal component is initialized at the initialization iteration 1>1 using the residual $\hat{\vec{x}}_l' = \vec{z} - \sum_{k=1}^{l-1} \hat{\omega}_k' \vec{s}(\hat{\vec{\theta}}_k')$ .. This method is similar to the successive interference cancellation scheme from prior art.

The number of initialization iterations (i.e., the initial number of signal components) can be either fixed to $L_{max}$ or inferred automatically by continuing the initialization until the pruning conditions (19) (or (30)) fail at some initialization iteration. Using the conditions (19) or (30) allows including even the weakest components during initialization.

The present implementation of the algorithm uses a combination of two methods, by limiting the maximum number of initial components to $L_{max}$.

Noise statistics:

A crucial part of the initialization procedure is to obtain an accurate estimation of the variance of the additive noise $\xi$. Logically, when the level of noise is high, the estimates of signal parameters can be less trusted, and thus components are sparsified more aggressively.

In many cases estimates of the noise variance can be derived from the signal itself. In the case of wireless channel estimation the tails of the measured impulse response can be used to estimate the noise variance. Alternatively, the noise variance can be estimated from the residual obtained at the end of the initialization step.

Selecting $\Sigma_1$ :

The obtained sparsity expressions for model order selection all depend on the covariance matrix of the additive noise $\vec{\xi}$, associated with the 1-th multipath component. The covariance matrix $\Sigma_1$ is related to the total covariance matrix $\Sigma$ as $\Sigma_1 = \beta_1 \Sigma$, where $\beta_1$ is the noise splitting parameter introduced as a part of the hidden data definition (5). In the SAGE algorithm applied to the estimation of superimposed signal parameters, this parameter was set to $\beta_1 = 1$; here, this choice is adopted. Obviously, in this case, $\Sigma_1 = \Sigma$ , and $SNR_1 = |\omega_l|^2 \vec{s}(\vec{\theta}_l)^H \sum^{-1} \vec{s}(\vec{\theta}_l)$ .

## STOPPING CRITERIA FOR UPDATE ITERATIONS

The iterative nature of the algorithm requires defining a stopping criterion for parameters updates. In the embodiment of the invention that is discussed here, a simple criterion is used: the estimation iterations are terminated when

1) The number of signal components stabilizes, and

2) The maximum change of signal parameters $\{\overline{\Omega, \alpha}\}$ between two consecutive iterations is less than 1%.

## ADAPTIVE MODEL ORDER ESTIMATION

The structure of the estimation algorithm also allows to increase the model order. Increasing the model order might be useful when $L_{max}$ is small, and not all physical multipath components might have been discovered. Alternatively, new components might also appear in time-varying scenarios. The new components can be initialized from the residual signal, after the model has been fit to the measured impulse responses. Once updates are finished at some iteration cycle j', the residual $\hat{\vec{x}}_{L+1} = \vec{z} - \sum_{l=1}^{L} \hat{\omega}_l' \vec{s}(\hat{\vec{\theta}}_l')$ can be computed and used to initialize new components as explained above (see ALGORITHM INITIALIZATION). Essentially, the residual signal can be used at any stage of the algorithm to initialize new components.

**ESTIMATION UNCERTAINTY AND SELECTION OF SENSITIVITY SNR'**

Four main sources of uncertainty in model-based multipath estimation are (i) the inaccuracyy of the specular model (1) in representing reality (e.g. diffuse components), (ii) errors in calibrating the measurement equipment, i.e. errors in the specification of the mapping $\overline{\theta}_1 \rightarrow s(t,\overline{\theta}_1)$ , (iii) the discrete-time approximation (3) to the multipath channel model, and (iv) the discrete optimization necessary due to the nonlinearity of the model versus its parameters. These aspects have a significant impact on the model order estimation. Any deviation from the "true" model (effects (i) and (ii)) and inaccuracies in parameter estimates $\overline{\Omega}$ (due to (iii) and (iv)) result in a residual error, manifesting itself as additional components.

If no penalization of the parameter log-likelihood is used, this error leads to additional signal components being detected, especially in high SNR regime. These non-physical components are numerical artefacts; they do not correspond to any real multipath components. Moreover, these artefact components (which are typically much weaker than the real specular signals) create pseudo-clusters since typically their parameters are highly correlated.

In the case of the VB-SAGE-G, -F and -L algorithms, the artefacts can be efficiently controlled using the pruning conditions (21) and (32) with an appropriately chosen sensitivity level SNR'. The sensitivity level can be set globally, e.g., when the goal is to extract all multipath components with $SNR_1 \geq SNR'$. Alternatively, SNR' can be tuned to each multipath component. The following technique implementing this individual tuning is proposed:

First, the impact of all above-mentioned inaccuracies together is considered. This approach is motivated by experimental evidence indicating that (a) each type of inaccuracies has a non-negligible effect on channel estimation, and (b) that these effects are difficult to quantify and also to separate. Second, it is assumed that - due to these inaccuracies - the residual error contributed by a given estimated multipath component is proportional to the sample of the delay power profile at the component delay. To support this thesis, it makes sense to presume that the stronger the multipath component is, the larger the residual error due to calibration and discretization error is. This rationale leads to the selection $SNR'(\tau)$ proportional to an estimate of the delay power profile. As such an estimate a low-pass filtered version of the delay power profile $DPP(\tau)$ is selected.

Alternatively, SNR' can be tuned to compensate for diffuse scattering components, and for discretization artefacts. A principle inspired by the Dense Multipath Component (DMC) profile is applied. The DMC jointly estimates the specular multipath components and the diffuse component. There, a statistical model (an exponentially decaying delay power profile) , for parametrizing diffuse scattering effects is proposed.

The DMC is characterized using a statistical model described by an exponentially decaying delay power spectrum. The method alternates between two estimation steps, one step for estimating the specular components and one step for estimating the DMC or, more specifically, the parameters of its delay power spectrum. The latter parameters are computed from the residual signal resulting after subtracting the estimated specular components from the observed signal. The method also employs a model selection scheme, in which estimated specular components undergo a test to decide whether they are kept or discarded. To this end, the power of a given multipath component is compared with an SNR threshold proportional to a value nearly equal to the sample of the estimated DMC spectrum at the component delay.

Generally speaking, this method is dictated by an aim towards a robust approach that makes as few assumptions as possible on the statistical properties of the channel response.

**APPLICATION OF THE VB-SAGE ALGORITHM TO THE ESTIMATION OF WIRELESS CHANNELS**

SYNTHETIC CHANNEL RESPONSES

The performance of the algorithm can be demonstrated with synthetic channel responses generated according to model (3). Here, a scenario is considered where a single received replica of the transmitted signal is represented as $\omega_1\overline{s}(t,\overline{\theta}_1) = \omega_1\overline{c}(\Phi_1)u(t\text{-}\tau)$ , with $\omega_1$ and $\tau_1$ denoting respectively the complex gain and the relative delay of the 1-th multipath component. Thus, $\overline{\theta}_1 = \{\Phi_1,\tau_1\}$ . The P-dimensional complex vector $\overline{c}\ (\Phi_1),..., c_p\ (\Phi_1)\ ]^T$ *is* the steering vector of the array, with $_jr\ 12 < ø_i\ 2$ denoting the direction of the incoming wavefront.

A linear array with P=16 ideal isotropic sensors is assumed, with the sensors spaced half a wavelength apart. The parameters of the multipath components are chosen by randomly drawing samples from the corresponding distributions: delays $_{Tj}$ and angles $0_1$ are drawn uniformly in the interval [0.03, 0.255] $\mu$sec and *[ - Jr 1 2, Jr 12]*, respectively. For generating the signal gains $_N$ two scenarios are followed.

First component gains are generated as $= \sqrt{C}e^{jn}$, where C>0 is some arbitrary real-valued constant, and $t_{j}$, is a uniformly distributed random phase in the interval [0,2 $_j$r]. This ensures that all components have the same power C and therefore the same per-component SNR. Thus, the resolved components have an equal chance of being detected under a certain chosen SNR constraint. The second strategy consists in sampling the values of $\omega_1$ from the complex Gaussian distribution $CN(0,C'\overline{e\text{-}'l'})$, where C'>O is some arbitrary real-valued constant, and $\tau_s$ is the delay spread set to $T_u/4$. In this case the distribution of the signal gains $\omega_1$ is conditioned on the delay $\tau_1$ such that the received power drops exponentially as the delay increases. The later choice approximates better the physical distribution of signal gains as a function of the multipath delay. At the same time it demonstrates the performance of the algorithm under changing per-component SNR conditions.

By sampling $\overline{z}$ (t) with a sampling period $T_s$ the equivalent discrete-time formulation (3) with N samples per channel is obtained. Channel data is recorded over the time window $T_u$=0.63 $\mu$sec and sampled at the rate $1/T_s$=200 MHz. In the simulations the number of specular multipath components is set to L=20. By fixing L the possible bias of the model order selection mechanism can be demonstrated. Additive noise $\xi$ is assumed to be white with covariance matrix $\Sigma = \sigma_{\xi}^2 I$ .

The simulated channels are generated under different SNR conditions. The considered SNR is the averaged per-component SNR defined as

$$\text{SNR}=\frac{1}{L}\sum_{l}\frac{|\omega_l|^2\|\vec{s}(\vec{\theta}_l)\|^2}{\sigma_{\xi}^2} .$$

With this setting the estimation step (13) is implemented as a sequence of two numerical optimizations; first, the estimation of $T_j$

$$\tau_l' = \arg\max_{\tau_l}\left\{\log p(\hat{\bar{x}}' \mid \tau_l,\hat{\phi}_l,\hat{\omega}_l) - \hat{\bar{\Phi}}_l\vec{s}(\tau_l,\hat{\phi}_l)^H\sum_l^{-1}\vec{s}(\tau_l,\hat{\phi}_l) + \log p(\tau_l)\right\}, \qquad (33)$$

with MB $(\tau_1)$ = $\{x_l,\omega_1\ \emptyset_l\}$, followed by the estimation of the azimuth $\Phi_1$

$$\hat{\phi}_l' = \arg\max_{\phi_l}\left\{\log p(\hat{\bar{x}}' \mid \hat{\tau}_l',\phi_l,\hat{\omega}_l') - \hat{\bar{\Phi}}_l'\vec{s}(\hat{\tau}_l',\phi_l)^H\sum_l^{-1}\vec{s}(\hat{\tau}_l',\phi_l) + \log p(\phi_l)\right\}, \qquad (34)$$

with $\text{MB}(\phi_l) = \left\{\vec{x}_l,\omega_l,\tau_l\right\}$.

For the initialization of the algorithm the scheme described above is applied. The maximum number of initialized components is set to Lmax=N. For VB-SAGE-G, -F and -L algorithms the modified pruning conditions (21) and (32) are used with SNR' set to the true SNR used in the simulations. This setting demonstrates the algorithm performance when the true per-component SNR is known. In particular, it allows to investigate how the modified pruning conditions can be used to control the estimation artefacts.

Five channel estimation and model order selection schemes are compared in the following:

(i) VB-SAGE-G, (ii) VB-SAGE-F, (iii) VB-SAGE-L, (iv) the SAGE algorithm with Bayesian Information Criterion for model order selection (SAGE-BIC), and (v) the VB-SAGE algorithm with the negative log evidence (NLE) approach for model order selection (VB-SAGE-NLE). The NLE is equivalent to the Bayesian interpretation of the Normalized Maximum Likelihood model order selection. For SAGE-BIC and VB-SAGE-NLE the initial number of components was set to the number of samples N.

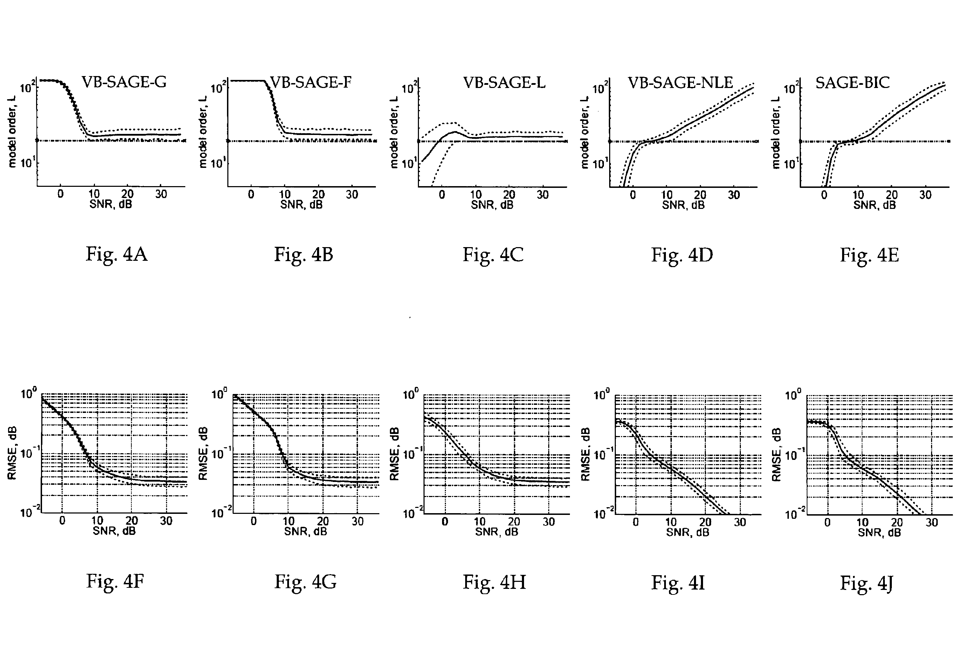

First, the simulation scenario is considered where all components have the same power. The corresponding results, averaged over 500 Monte Carlo runs, are summarized in Figs. 4A-J. The true number of components is L=20 (dotted line in Figs. 4A-E). The solid lines denote the averaged estimates of the corresponding parameters. Upper and lower dashed lines in Figs. 4F-J denote the 5th and 95th percentiles of the estimates, respectively.

The VB-SAGE-G, VB-SAGE-F, and VB-SAGE-L clearly outperform the other two methods, with VB-SAGE-L exhibiting the best performance. It is noticed that pruning (18) for VB-SAGE-G and VB-SAGE-F fails for low SNR; also the initial number of components (126 in this case) remains unchanged during the update iterations. It can also be noticed that for VB-SAGE-G the pruning condition (18) becomes effective 5 - 6dB earlier as compared to VB-SAGE-F scheme. VB-SAGE-L algorithm, however, is does not exhibit such behaviour. Further, VB-SAGE-G yields approximately 5-6dB performance gain as compared to VB-SAGE-F. Moreover, VB-SAGE-L method exhibits slightly smaller bias, which results in better RMSE values.

The VB-SAGE-NLE and SAGE-BIC algorithms perform reasonably only for a limited SNR range around 8-14dB, and fail as the SNR increases. The reason for this is an adequate penalization of the parameter likelihood, which leads to the introduction of estimation artefacts. These artefacts, although having no physical meaning, help to avoid the RMSE floor (as seen in Figs. 4I and 4J). It should be stressed that the same effect can be observed with VB-SAGE-G and VB-SAGE-L algorithms when SNR' is not used to enforce sparsity and correct for model order estimation errors.

Obviously, the model order has a significant impact on the convergence speed of the algorithm. Fig. 5 depicts the averaged number of algorithm iterations for different model selection criteria and SNR levels. Again, VB-SAGE-L is a clear winner. The overestimation of the model order using VB-SAGE-NLE and SAGE-BIC leads to a significant increase of the number of iterations as the SNR increases. The number of iterations of VB-SAGE-NLE starts to decrease for SNR>30 dB. This might be explained as follows: as the noise level drops below a certain level, the used initialization finds parameter values closer to the optimum, which in consequence requires less update iterations.

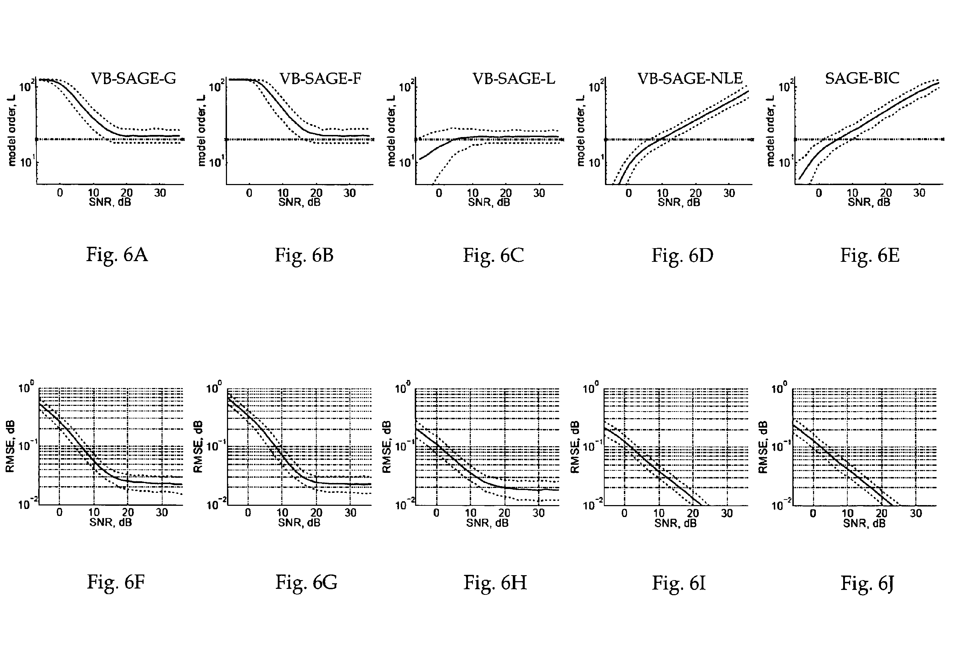

A second scenario is considered where the component power decreases exponentially versus delay. These results are pictured in Figs. 6A-J. Here, the performance of the proposed estimation algorithms in synthetic channels with exponentially decaying component power is shown. The true number of components is L=20 (dotted line in Figs. 6A-E). The solid lines denote the averaged estimates of the corresponding parameters.

Upper and lower dashed lines in Figs. 6F-J denote the 5th and 95th percentiles of the estimates, respectively. A picture similar to the equal-power case is observed here. The performance of the VB-SAGE-L method is now smoother in the tested SNR range, and for low SNR it is significantly better than for other tested methods. In this setting both VB-SAGE-G and VB-SAGE-F methods require higher SNR to bring the estimated model order within the range of the true number of components. All three conditional methods are slightly biased in model order estimates. On average they overestimate the model order by 2 components.

ESTIMATION OF MEASURED WIRELESS CHANNELS

In the following, the performance of the VB-SAGE-L is investigated for model order selection on measured wireless channel responses collected in an indoor environment. The test is based on a measurement setup consisting of 32 receiving and 50 transmitting antenna elements. The sounder operated at a frequency of 5.2 GHz with a chip period of Tp=10 nsec. The sounding sequence consisted of M=255 chips, resulting in the burst waveform duration of $T_b$=2,55 psec. The output of the matched filter was sampled with the period $T_s$=Tp/2 (i.e., 2 samples/chip). For simplicity, a single receiving antenna is considered.

The estimation results obtained using the VB-SAGE-L-based order selection are compared to those obtained with Bartlett beamformer outputs. In order to minimize the effect of estimation artefacts, (32) is used. The sensitivity level SNR' is computed from the estimated delay power profile in the following way: a smoothed estimate of the delay power profile DPP($_\tau$) is normalized with the estimated additive noise variance $\sigma_\xi^2$; the sensitivity SNR'($_\tau$) is then de-

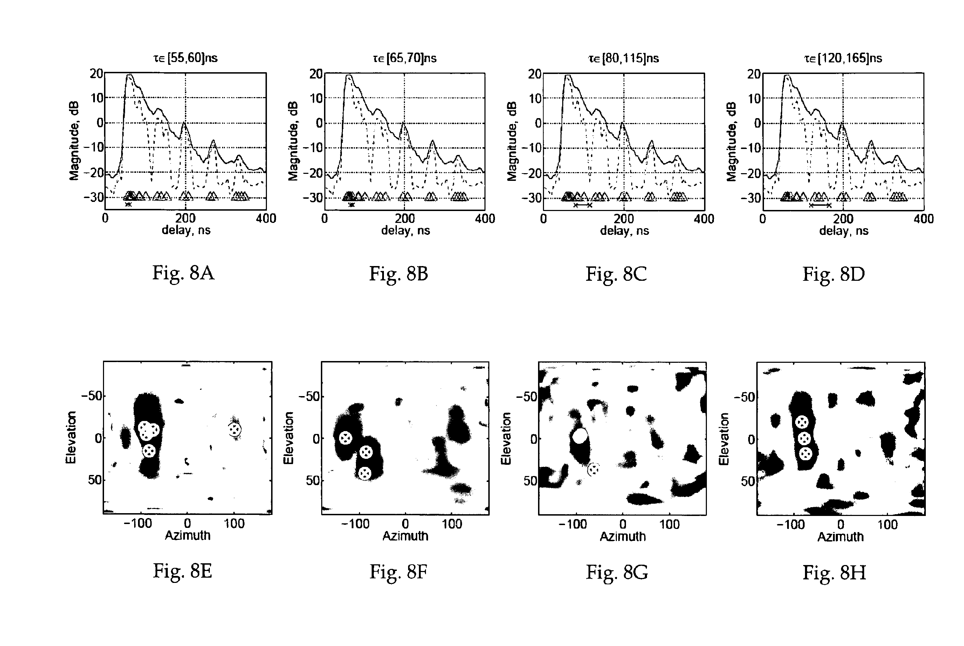

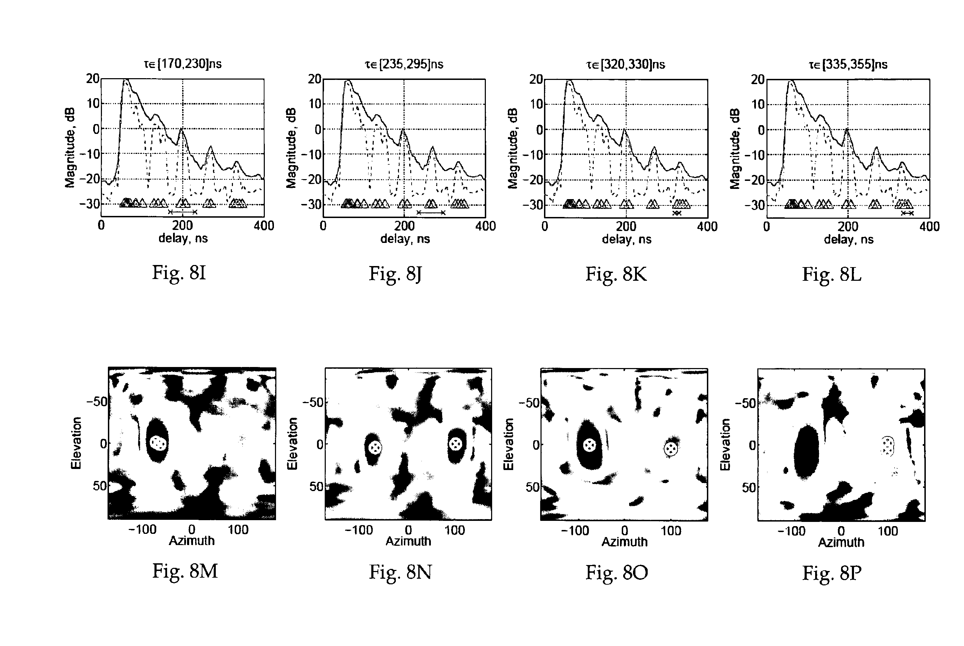

fined as SNR'=$\dfrac{DPP(\tau)}{\sigma_\xi^2} \cdot \dfrac{1}{10^{15/10}}$ (see Fig. 7). This setting allows to detect components that are at most 15 dB below the received power at the delay $_\tau$, and remove weaker components. The algorithm is initialized as described above. To initialize $\tau_l$ 's the DPP is partitioned in 7 equal delay segments, covering the delay interval [10, 360] ns. Then, using (33) and (34) at most 7 components per segment are intialized, which results in Lmax=49. The corresponding estimates, along with the corresponding Bartlett spectra, are summarized in Fig. 8A-P.

In Fig. 8A-D and Fig. 8I-L, Bartlett estimates (solid line) and model-based estimates (dashed line) of the power delay profile are shown. Triangles denote the delays of the estimated components. In Fig. 8E-H and Fig. 8M-P normalized Bartlett estimates of the azimuth and elevation of departure for selected delay ranges (denoted by crosses in Fig. 8A-D and Fig. 8I-L, respectively).

For the used sensitivity level SNR'($_\tau$) the algorithm estimates L=22 components. From 22 found components, 11 are found with delays in the interval [55, 115] nsec, i.e., when most of the power is received. This corresponds well to the geometry of the environment, where the channel measurement data was collected. Due to the delay-dependent sensitivity level SNR'(z) very weak components at the tails of the delay response are also detected. Their positions coincide well with the maxima of the Bartlett spectrum estimates. Also, not all of the "footprints" in the Bartlett spectrum have been identified as multipaths. Reasons behind this are the desired sensitivity of the algorithm, the mismatch between the signal model and the real situation, and that some of the footprints observed in the Bartlett spectrum are in fact due to side lobes in the system response, and thus they do not correspond to any true physical multipath components.

Abovementioned method allows estimation of the number of relevant multipath components in the response of radio channels and the parameters of these components within the Bayesian framework. High resolution estimation of the multipath components is performed using the VB-SAGE algorithm - a new extension of the traditional SAGE-algorithm - which allows to compute estimates of the probability density functions (pdfs) of the component parameters, rather than parameter point estimates. By introducing sparsity priors over the multipath component gains, the sparse VB-SAGE algorithm allows to estimate the pdfs of the component parameters jointly with the pdfs of the sparsity parameters by minimizing the variational free energy. The pdfs of the parameters of a single component are updated at each iteration of the algorithm, with the iterations cycling through the components. Due to the Monotonicity Property of the VB-SAGE algorithm, the free-energy is non-decreasing versus the iterations.

According to the invention the method above was applied to the estimation of the multipath components in the response of synthetic and measured wireless multipath channels. It was shown by means of Monte Carlo simulations that conditional model order estimation methods with sensitivity-adjusted pruning condition outperform BIC and NLE model order selection criteria. The latter methods fail since the finite precision of parameter estimates lead to the introduction of numerical artefacts, which leads to a decreasing RMSE at the expense of an increased model order. In case of wireless channel estimation this is highly undesirable, since the estimation artefacts have no physical meaning.

The proposed modifications of the pruning conditions allow to correct for possible model order estimation bias due to the modelling mismatch, or even time-varying SNR. The Laplace prior results in the best performance among the tested methods. Simulations show that for low SNR the algorithm keeps only reliably estimated components, while successfully removing the artefacts. This VB-SAGE-L algorithm also exhibits the fastest convergence as compared to the other tested solutions with the same stopping criteria.

The VB-SAGE-L is applied to the estimation of the multipath components in the measured CIRs. In order to minimize the effect of artefacts and diffuse scattering, the detector sensitivity SNR' is defined based on the estimated delay power profile. Since the artefacts are typically more pronounced in areas of the high received power, the smoothed version of the delay power profile can be used as an indicator of the received power variations. The VB-SAGE demonstrates a very good performance precision, and the obtained results correspond well with the geometry of the environment where the data was collected. The VB-SAGE algorithm provides a new and effective tool for efficient estimation of wireless channels. The flexibility of the VB-SAGE and its iterative structure make it very attractive in many applications in wireless communications: analysis and estimation of complex MIMO channel configurations in channel sounding and MIMO radars, channel estimation in iterative receivers performing joint channel estimation and data decoding, and extraction of location-dependent features in localization techniques.

**Claims**

1. A method for the joint estimation of a multipath wireless channel and of the number of specular propagation paths present in the channel in a wireless transmission system with at least one transmitter and at least one receiver, with both the transmitter and the receiver being equipped with multiple sensing elements, the method comprising the steps of:

   a) Transmitting a training/probing sequence that is known to the receiver from the transmitter to the receiver;
   b) Receiving the transmitted sequence and sampling it;
   c) Defining L potential signal components, each component being assumed to be parameterized with a set of parameters including a sparsity parameter that parameterizes a prior probability density function (pdf) for the multipath component;
   d) Jointly estimating the pdfs of the parameters of all multipath components from c) by defining auxiliary (latent) variables for the subset of parameters of a single component assuming that the parameters of the other components are fixed, and updating the pdfs of the component parameters (including the corresponding sparsity parameter) using the estimated admissible hidden date;
   e) Evaluating developed pruning conditions to decide whether the updated component of step d) is removed or kept;
   f) Repeating steps d) and e) for all L components, one component after another, one iteration per component, after all components have been updated, and repeating the iterations anew until a set convergence criterion is complied with;
   g) Feeding the channel components and their parameters to further processing.

2. The method of claim 1, wherein in step c) the number of components L is set large enough such as to exceed the possible true number of multipath components present.

3. The method of claim 1 or 2, wherein in step c) one of the following set of parametric sparsity priors is used:

> - a Gaussian sparsity prior in the complex domain, selecting p($q$ $1$ $al$) = $CN$ $(0, al')$ , where CN(m, s) is a complex Gaussian distribution with a mean m and variance s.
> - a flat prior, selecting $p(\omega_l | \alpha_l \alpha_l) = CN(0, a_j\text{-}l)$ , in the limiting case as $a, - 0$ ;
>
> - a Laplace prior in the complex domain, selecting $p(\omega_l | \alpha_l) = \dfrac{2\alpha_l^2}{\pi}\exp(-2\alpha_l | \omega_l)$ ,

with $q$ being the multipath gain factor and $a_j$ being the prior (sparsity) parameters of the 1-th component.

4. The method of claim 1 or claim 2, wherein in step f) the update cycles, repeating steps d) and e), are stopped when the number of signal components stabilizes or when the maximum change of the signal component parameters is below a certain threshold.

5. The method of claim 4 wherein the threshold for the change of the signal component parameters is 1 percent.

6. The method of one of the claims 1 to 5, wherein the pruning test on whether a signal component is removed or should be kept is implemented by determining the signal-to-noise ratio of the signal component in question and comparing it to the threshold which depends on the estimated sparsity parameter.

Fig. 1

Fig. 2

Fig. 3

Fig. 5

Fig. 7

Fig. 4A     Fig. 4B     Fig. 4C     Fig. 4D     Fig. 4E

Fig. 4F     Fig. 4G     Fig. 4H     Fig. 4I     Fig. 4J

EP 2 429 138 A1

VB-SAGE-G

Fig. 6A

VB-SAGE-F

Fig. 6B

VB-SAGE-L

Fig. 6C

VB-SAGE-NLE

Fig. 6D

SAGE-BIC

Fig. 6E

Fig. 6F

Fig. 6G

Fig. 6H

Fig. 6I

Fig. 6J

Fig. 8A    Fig. 8B    Fig. 8C    Fig. 8D

Fig. 8E    Fig. 8F    Fig. 8G    Fig. 8H

τ∈[170,230]ns

Fig. 8I

τ∈[235,295]ns

Fig. 8J

τ∈[320,330]ns

Fig. 8K

τ∈[335,355]ns

Fig. 8L

Fig. 8M

Fig. 8N

Fig. 8O

Fig. 8P

## EUROPEAN SEARCH REPORT

Application Number

EP 10 45 0142

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SHUTIN D ET AL: "Application of the evidence procedure to the estimation of wireless channels", EURASIP JOURNAL ON ADVANCES IN SIGNAL PROCESSING 2007 HINDAWI PUBLISHING CORPORATION US, vol. 2007, 8 March 2007 (2007-03-08), XP007917682, DOI: DOI:10.1155/2007/79821 * the whole document * | 1-6 | INV. H04L25/02 H04L25/03 H04B7/08 |
| Y | SHUTIN D ET AL: "Space-alternating attribute-distributed sparse learning", 2010 2ND INTERNATIONAL WORKSHOP ON COGNITIVE INFORMATION PROCESSING (CIP 2010) 14-16 JUNE 2010 ELBA, ITALY, 14 June 2010 (2010-06-14), - 16 June 2010 (2010-06-16), pages 209-214, XP031777356, 2010 2nd International Workshop on Cognitive Information Processing (CIP 2010) IEEE Piscataway, NJ, USA DOI: DOI:10.1109/CIP.2010.5604254 ISBN: 978-1-4244-6457-9 * the whole document * | 1-6 | |
| A | DMITRIY SHUTIN ET AL: "Evidence-based custom-precision estimation with applications to solving nonlinear approximation problems", ACOUSTICS SPEECH AND SIGNAL PROCESSING (ICASSP), 2010 IEEE INTERNATIONAL CONFERENCE ON, IEEE, PISCATAWAY, NJ, USA, 14 March 2010 (2010-03-14), pages 2094-2097, XP031697085, ISBN: 978-1-4244-4295-9 * the whole document * | 1-6 | TECHNICAL FIELDS SEARCHED (IPC) H04L H04B |

-/--

The present search report has been drawn up for all claims

| Place of search | Date of completion of the search | Examiner |
|---|---|---|
| Munich | 21 March 2011 | Schiffer, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

Europäisches Patentamt
European Patent Office
Office européen des brevets

**Application Number**

EP 10 45 0142

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DMITRIY SHUTIN ET AL: "Sparse Bayesian Estimation of Superimposed Signal Parameters", COMPUTATIONAL ADVANCES IN MULTI-SENSOR ADAPTIVE PROCESSING, 2007. CAMPSAP 2007. 2ND IEEE INTERNATIONAL WORKSHOP ON, IEEE, PISCATAWAY, NJ, USA, 12 December 2007 (2007-12-12), pages 273-276, XP031246359, ISBN: 978-1-4244-1713-1 * the whole document * ----- | 1-6 | |
| A | SHUTIN D ET AL: "Application of the Evidence Procedure to the Estimation of the Number of Paths in Wireless Channels", 2005 IEEE INTERNATIONAL CONFERENCE ON ACOUSTICS, SPEECH, AND SIGNAL PROCESSING (IEEE CAT. NO.05CH37625) IEEE PISCATAWAY, NJ, USA, IEEE, PISCATAWAY, NJ, vol. 3, 18 March 2005 (2005-03-18), pages 749-752, XP010792760, DOI: DOI:10.1109/ICASSP.2005.1415818 ISBN: 978-0-7803-8874-1 * the whole document * ----- | 1-6 | **TECHNICAL FIELDS SEARCHED (IPC)** |

The present search report has been drawn up for all claims

| Place of search | Date of completion of the search | Examiner |
|---|---|---|
| Munich | 21 March 2011 | Schiffer, Andrea |

EPO FORM 1503 03.82 (P04C01)